# EUROPÄISCHE PATENTSCHRIFT

(11) **EP 1 159 178 B1**
(45) Veröffentlichungstag und Bekanntmachung des Hinweises auf die Patenterteilung: **12.10.2005**
(21) Anmeldenummer: 00910750.9
(22) Anmeldetag: 03.03.2000
(51) Int. Cl.: B60T 10/02, B60T 1/087, F16H 61/64

(54) **VERFAHREN ZUR STEUERUNG EINER HYDRODYNAMISCHEN BAUEINHEIT UND STEUERVORRICHTUNG**
METHOD FOR CONTROLLING A HYDRODYNAMIC ELEMENT AND CONTROL DEVICE
PROCEDE DE COMMANDE D'UN COMPOSANT HYDRODYNAMIQUE ET DISPOSITIF DE COMMANDE

(30) Priorität: 05.03.1999 DE 19909690
(43) Veröffentlichungstag der Anmeldung: 05.12.2001
(73) Patentinhaber: Voith Turbo GmbH & Co. KG, 89522 Heidenheim (DE)
(72) Erfinder: NITSCHE, Martin, D-89547 Gerstetten (DE); TONEATTO, Marco, D-89518 Heidenheim (DE)
(74) Vertreter: Dr. Weitzel & Partner
(86) Internationale Anmeldenummer: PCT/EP2000/001772
(87) Internationale Veröffentlichungsnummer: WO 2000/053478

(56) Entgegenhaltungen:
- DE-A1- 2 618 649
- DE-A1- 3 430 456
- DE-B1- 2 150 115
- DE-B1- 2 656 669
- DE-U1- 29 700 605

## Beschreibung

Die Erfindung betrifft ein Verfahren zur Steuerung einer hydrodynamischen Baueinheit in einer Antriebseinheit mit mindestens einem Getriebeteil und einem beiden zugeordneten und gemeinsam genutzten Schmiermittel- bzw. Betriebsmittelversorgungssystem, umfassend eine Betriebsmittelquelle, eine Kühleinrichtung und eine Speichereinrichtung, mit den Merkmalen aus dem Oberbegriff des Anspruches 1, ferner eine Steuervorrichtung.

Hydrodyamische Baueinheiten sind für eine Vielzahl von Einsatzmöglichkeiten bekannt. Unter anderem finden derartige hydrodynamische Baueinheiten als hydrodynamische Kupplungen und hydrodynamische Bremsen Verwendung. Betreffend die Möglichkeiten der konstruktiven Ausgestaltung von hydrodynamischen Maschinen als hydrodynamische Kupplungs- oder Bremseinrichtungen wird auf "Voith, Hydrodynamische Getriebe, Kupplungen, Bremsen, Otto Krausskopf Verlag GmbH, Mainz, 1970" verwiesen, wobei der Offenbarungsgehalt dieser Schrift diesbezüglich vollumfänglich in denjenigen der vorliegenden Anmeldung miteinbezogen wird.

Als bevorzugtes Anwendungsgebiet der vorliegenden Erfindung, ohne hierauf beschränkt zu sein, werden hydrodynamische Bremsen, die auch als hydrodynamische Retarder bezeichnet werden, angesehen.

Hydrodynamische Retarder sind beispielsweise aus "VDI Handbuch Getriebetechnik II": VDI-Richtlinien VDI 2153, Hydrodynamische Leistungsübertragung Begriffe - Bauformen - Wirkungsweisen, Kapitel 7, Bremsen oder "Dubbel": Taschenbuch für den Maschinenbau, 18. Auflage, Seiten R49 bis R53, bekannt, deren Offenbarungsgehalt bezüglich der Gestaltung dieser Baueinheiten vollumfänglich in die vorliegende Anmeldung miteinbezogen wird. Retarder werden, insbesondere beim Einsatz in Kraftfahrzeugen oder in Anlagen mit stark wechselndem Betrieb, durch Füllen und Entleeren des beschaufelten Arbeitskreislaufs mit einem Betriebsfluid ein- oder ausgeschaltet. In Antriebssträngen wird im allgemeinen einer Mehrzahl von Komponenten ein gemeinsam nutzbares Schmier- und Betriebsmittelversorgungsystem zugeordnet. Zur optimalen Erfüllung der an die Einzelelemente im Antriebssystem gestellten Forderungen sind den Einzelelementen in der Regel Steuereinrichtungen zugeordnet, welche eine entsprechende Versorgung mit Betriebs- bzw. Schmiermittel gewährleisten. Der steuer- und regelungstechnische Aufwand ist sehr hoch.

Aus der Druckschrift EP 0 432 903 A1 ist ein Verfahren zur Steuerung der Befüllung eines hydrodynamischen Bauelementes in Form eines hydrodynamischen Retarders gemäß dem Oberbegriff des Anspruchs 1 bekannt. Bei diesem sind dem hydrodynamischen Retarder und dem Getriebe jeweils ein eigenes Betriebs- und Schmiermittelversorgungssystem zugeordnet. Die Getriebebaueinheit umfaßt ferner einen hydrodynamischen Wandler, dessen Versorgungssystem mit dem Schmiermittelsystem des Getriebes gekoppelt ist. Dabei erfolgt die Versorgung mit Schmiermittel entweder über den Kühler vom hydrodynamischen Drehzahl-/Drehmomentwandler oder direkt vom Auslaß des Wandlers an die Schmiermittelleitung. Eine Versorgung des Getriebes mit Schmiermittel erfolgt immer lediglich dann, wenn der hydrodynamische Drehzahl-/Dremomentwandler entleert wird. Zu diesem Zweck sind das Versorgungssystem des hydrodynamischen Drehzahl-/Drehmomentwandlers und das Schmiermittelsystem des Getriebes direkt über eine Druckwaage gekoppelt. Durch diese genaue Zuordnung kann jedoch eine Schmiermittelversorgung nur im ungenügenden Maße gewährleistet werden, nämlich nur unmittelbar nach dem Anfahrvorgang. Für den Ausgleich weiterer Leckagen im Schmiermittelversorgungssystem sind separate Maßnahmen zu treffen.

Der Erfindung liegt daher die Aufgabe zugrunde eine Verfahren zur Steuerung eines hydrodynamischen Bauelementes, ferner eine Vorrichtung zur Steuerung eines hydrodynamischen Bauelementes dahingehend zu entwickeln, daß mit möglichst geringem konstruktiven und steuerungstechnischen Aufwand immer eine sichere und zuverlässige Betriebsweise der einzelnen Komponenten, insbesondere des hydrodynamischen Bauelementes gewährleistet wird.

Die erfindungsgemäße Lösung der Aufgabe ist durch die Merkmale der Ansprüche 1 oder 6 charakterisiert. Vorteilhafte Ausgestaltungen sind in den Unteransprüchen wiedergegeben.

Erfindungsgemäß ist vorgesehen, daß in einem Antriebssystem mit wenigstens einem hydrodynamischen Bauelement, umfassend wenigstens zwei Schaufelräder, die miteinander einen torusförmigen Arbeitsraum bilden, welchem wenigtens eine Zulaufleitung und eine Ablaufleitung zugeordnet sind, einem Getriebeteil und einem von diesen Baueinheiten gemeinsam nutzbaren Schmier- bzw. Betriebsmittelversorgungssystem, eine Sollgröße für eine, den Funktionszustand des hydrodynamischen Bauelementes wenigstens mittelbar charakterisierende Größe als Eingangsgröße einer, dem gemeinsam zugeordneten Schmiermittel- bzw. Betriebsmittelversorgungssystem zugeordneten Steuereinrichtung zur Ansteuerung einer Stelleinrichtung zur Beeinflussung der Betriebsmittelversorgung des hydrodynamischen Bauelementes und der Schmiermittelversorgung des Getriebeteils derart vorgebbar ist, daß wenigstens drei Grundfunktionszustände des hydrodynamischen Bauelementes einstellbar sind, wobei in einem Grundfunktionszustand zusätzlich eine Versorgung des Schmiermittelsystems des Getriebeteiles einstellbar ist, und wobei die Stellgröße zur Betätigung der Stelleinrichtung aus dem Sollwert der den Funktionszustand des hydrodynamischen Bauelementes wenigstens mittelbar charakterisierende Größe in Abhängigkeit einer den Druck in der Ablaufleitung des hydrodynamischen Bauelementes wenigstens mittelbar charakterisierenden Größe erzeugt wird. Über die Stelleinrichtung zur Beeinflussung der Betriebsmittelversorgung des hydrodynamischen Bauelementes sind wenigstens drei Grundfunktionszustände für das hydrodynamischen Bauelement einstellbar, wobei
a) in einem ersten Grundfunktionszustand der hydrodynamischen Baueinheit Betriebsmittel von einer Betriebsmittelquelle über die Kühleinrichtung dem Schmiermittelanschluß des Getriebeteiles zugeführt wird;
b) in einem zweiten Grundfunktionszustand dem Arbeitsraum des hydrodynamischen Bauelementes Betriebsmittel vom Speicher und der Betriebsmittelquelle zugeführt wird und in einem geschlossenen Kreislauf ein Teil des Betriebsmittels aus dem Arbeitsraum über die Kühleinrichtung dem Arbeitsraum wieder zugeführt wird und
c) in einem dritten Grundfunktionszustand, welcher auch als Regelzustand bezeichnet wird, ein Teil des Betriebsmittels aus dem Arbeitsraum über die Kühleinrichtung dem Arbeitsraum wieder zugeführt wird und ein Leckageausgleich durch Koppelung mit der Betriebsmittelversorgungsquelle vorgesehen wird.

Dabei werden im dritten Grundfunktionszustand vorzugsweise wenigstens zwei Grenzzustände unterschieden - ein erster Grenzzustand für hohe Betriebsdrücke und ein zweiter Grenzzustand für niedrige Drücke. Die Änderung des Druckes über den möglichen Steuerbereich erfolgt entweder stufenweise oder stufenlos.

Die Begriffe "Zulaufleitung" und "Ablaufleitung" sind im vorrichtungstechnischen Sinn nicht zwingend als Leitungen zu verstehen, sondern können auch in Form von Kanälen oder anders ausgebildeten Führungen für das Betriebsmittel vorliegen.

Die Verstellung zwischen den einzelnen Grundfunktionszuständen erfolgt im einfachsten Fall in einer Vielzahl von Stufen, vorzugsweise jedoch ebenfalls stufenlos.

Das erfindungsgemäße Verfahren ermöglicht es, daß mit einem gemeinsam von hydrodynamischen Bauelement und Getriebeteil genutzten Betriebsmittel- bzw. Schmiermittelversorgungssystem mit geringem konstruktiven und vorallem steuerungstechnischen Aufwand immer eine sichere und zuverlässige Betriebsweise der einzelnen Komponenten, insbesondere des hydrodynamischen Bauelementes gewährleistet wird, da immer eine, den Druck in der Ablaufleitung des hydrodynamischen Bauelementes wenigstens mittelbar charakterisierende Größe, vorzugsweise direkt der Druck, Berücksichtigung findet.

In einer Weiterentwicklung des erfindungsgemäßen Verfahrens werden zusätzliche Maßnahmen ergriffen, um eine sichere Betriebsweise des gesamten Antriebssystems zu gewährleisten. So sind z.B. weitere Ventileinrichtungen vorgesehen, um einzelne Teilaufgaben vorrangig bzw. in einer bestimmten Wertigkeit zu lösen. Dazu gehören beispielsweise
a) die vorrangige Bereitstellung des Hauptdruckes des hydrodynamischen Bauelementes;
b) die ganzzeitige Schmiermittelversorgung des Getriebeteiles, beispielsweise druckabhängig oder durch die Realisierung einer Mengenregelung.

Bei der hydrodynamischen Baueinheit handelt es sich vorzugsweise um einen hydrodynamischen Retarder, umfassend ein Rotor- und ein Statorschaufelrad. Der Einsatz bei hydrodynamischen Kupplungen ist ebenfalls denkbar. Einen weiteren Anwendungsfall stellt eine hydrodynamische Baueinheit dar, mit welcher wahlweise sowohl die Funktion der Erzeugung eines Bremsmomentes als auch die Übertragung hoher Drehmomente realisiert werden kann, wie beispielsweise in den Druckschriften PCT/EP97/06623 und PCT/EP97/06646 beschrieben.

Die hydrodynamische Baueinheit umfaßt wenigstens zwei Schaufelräder, welche wenigstens einen torusförmigen Arbeitsraum miteinander bilden. Es besteht theoretisch auch die Möglichkeit, das erfindungsgemäße Verfahren für Ausführungen hydrodynamischer Baueinheiten mit mehreren Arbeitsräumen, beispielsweise Doppelkupplungen, anzuwenden.

Für die räumliche Anordnung der hydrodynamischen Baueinheit im Antriebssystem bezogen auf die Kraftfiußrichtung im Traktionsbetrieb bestehen folgende Möglichkeiten:
a) vor dem Getriebe
b) im Getriebe
c) hinter dem Getriebe

Vorrichtungsmäßig werden diese Aufgaben mittels einer Steuereinrichtung realisiert, welche dem gemeinsam von hydrodynamischen Bauelement und Getriebeteil genutzten Schmier- bzw. Betriebsmittelversorgungssystem zugeordnet ist. Die Verwendung einer einzigen bzw. gemeinsam nutzbaren Steuereinrichtung bietet den Vorteil einer zentralen Anordnung zur Versorgung mehrere Systeme. Eine besonders vorteilhafte Ausgestaltung der Steuereinrichtung ist in Anspruch 8 beschrieben. Vorzugsweise umfaßt diese eine Druckwaage, d.h. das Funktionsprinzip beruht dabei auf der Kompensation der auf einen Kolben bekannter Querschnittsfläche oder die Sperrflüssigkeit in einem Ringrohr wirkenden Druckkraft durch eine Gegenkraft, wobei durch Verschiebung beispielsweise des Kolbens ein Kräftegleichgewicht eingestellt wird. Als Druckkraft und Gegenkraft fungieren dabei eine, der Sollwertvorgabe für einen gewünschten Funktionszustand des hydrodynamischen Bauelementes entsprechende Druckkraft, welche durch die Größe der Angriffsfläche in der Druckwaage und einem, beispielsweise mittels eines Proportionalventiles erzeugten Druckes beschreibbar ist, und eine Kraft, welche aus dem Druck in der Ablaufleitung des hydrodynamischen Bauelementes und der diesem zugeordneten Angriffsfläche in der Druckwaage charakterisiert ist.

Die Steuereinrichtung weist dazu ein Gehäuse auf, in welches wenigstens eine Steuerbohrung eingearbeitet ist. Die Steuerbohrung weist über ihre axiale Erstreckung betrachtet vorzugsweise unterschiedliche Durchmesser auf. Diese bilden einzelne Steuerkammem, welche mit Anschlüssen koppelbar sind. Denkbar sind jedoch auch Ausführungen mit eckigen Kammern. In der Steuerbohrung ist wenigstens ein Steuerkolben angeordnet, welcher in axialer Richtung verschiebbar ist und der über seine axiale Erstreckung vorzugsweise ebenfalls unterschiedliche Durchmesser aufweist. Die einzelnen Teilbereiche unterschiedlichen Durchmessers bzw. bei eckiger Gestaltung der unterschiedlichen Abmessungen am Steuerkolben und der Steuerbohrung bilden die sogenannten Steuerkanten.

Die Bereiche unterschiedlichen Außendurchmessers bzw. der unterschiedlichen Außenabmessungen des Steuerkolbens können dabei alternierend abwechselnd angeordnet sein. Vorzugsweise ist der Steuerkolben derart ausgeführt, daß dieser über die axiale Länge betrachtet lediglich zwei unterschiedliche Durchmesser aufweist, einen ersten Durchmesser, welcher kleiner dem Durchmesser der Steuerbohrung ausgeführt ist, und einen zweiten Durchmesser, welcher im wesentlichen dem Durchmesser der Steuerbohrung unter Berücksichtigung der erforderlichen Toleranzen entspricht. Entsprechend der Stellung des Steuerkolbens, insbesondere der Steuerkanten in der Steuerbohrung, werden die einzelnen Anschlüsse wenigstens teilweise oder ganz freigegeben oder verdeckt, wodurch die einzelnen Funktionszustände des hydrodynamischen Bauelementes und die Funktion der Versorgung des Schmiermittelsystems des Getriebeteils realisiert werden. Als einzelne Anschlußmöglichen sind dabei wenigstens die folgenden vorzusehen:

| | |
|---|---|
| Anschluß 1 - | Betriebsmittelversorgungsquelle und Kühleinrichtung |
| Anschluß 2 - | Speicher |
| Anschluß 3 - | Zulaufleitung des hydrodynamischen Bauelementes |
| Anschluß 4 - | Ablaufleitung des hydrodynamischen Bauelementes |
| Anschluß 5 - | Kühleinrichtung |
| Anschluß 6 - | Schmiermittelleitung für Getriebe |

Die Eingangsgröße ist eine Sollgröße für eine, den Funktionszustand des hydrodynamischen Bauelementes wenigstens mittelbar charakterisierende Größe. Diese ist vorgebbar, beispielsweise in Form eines Signales für eine Inbetriebnahme des als hydrodynamischer Retarder ausgeführten Bauelementes. Aus dieser wird eine Stellgröße zur Beaufschlagung einer Stelleinrichtung zur Beeinflussung der Betriebsmittelversorgung des hydrodynamischen Retarders gebildet. Bei Ausführung der Steuereinrichtung als Druckwaage fungiert der Steuerkolben als Stelleinrichtung. Die Stellgröße ist die auf den Steuerkolben wirkende Kraft.

Die Druckwaage stellt eine einfache kostengünstige und kompakte Steuereinrichtung dar. Zur Schaffung einer universellen Baueinheit werden vorzugsweise weitere Ventileinrichtungen zur Erfüllung unterschiedlicher Funktionen, beispielseise einer Mengenregelung zur Schmiermittelversorgung unabhängig von den im System vorhandenen Drücken, in der Steuereinrichtung integriert. Die Ventileinrichtungen sind dabei vorzugsweise zu Baueinheiten zusammengefaßt, welche in der Steuerbohrung der Druckwaage angeordnet werden können, womit eine besonders kompakte Steuervorrichtung geschaffen wird.

Die erfindungsgemäße Lösung ist nachfolgend anhand von Figuren erläutert. Es zeigen:
- Fig. 1a-1c: einen Ausschnitt aus einem Schmiermittel- bzw. Betriebsmittelversorgungssystem mit erfindungsgemäßer Steuerung eines hydrodynamischen Bauelementes;
- Fig. 2a-2b: allgemein ein Blockschaltbild der erfindungsgemäßen Steuerung;
- Fig. 3: eine Ausführung einer erfindungsgemäß gestalteten Steuervorrichtung in Form einer Druckwaage;
- Fig. 4: die Stellungen des Steuerkolbens der Druckwaage gemäß Fig. 3 in den in den Fig. 1a-1c beschriebenen Funktionszuständen des hydrodynamischen Bauelementes;
- Fig. 5: eine Ausführung eines Schmiermittel- bzw. Betriebsmittelversorgungsystems mit Mengenregeleinrichtung;
- Fig. 6a- 6b: verdeutlichen anhand jeweils eines Ausschnittes aus einer Druckwaage mit unterschiedlicher Gestaltung des Steuerkolbens die Anordnung der zur Realisierung einer ganzzeitigen Schmiermittelversorgung erforderlichen Ventileinrichtungen;
- Fig. 7a- 7b: verdeutlichen jeweils anhand eines Ausschnittes aus unterschiedlich gestalteten Druckwaagen die Anordnung der in den Verbindungsleitungen zwischen Speicher und Druckwaage bzw. Speicher und Schmiermittelversorgungsleitung integrierten Ventileinrichtungen.

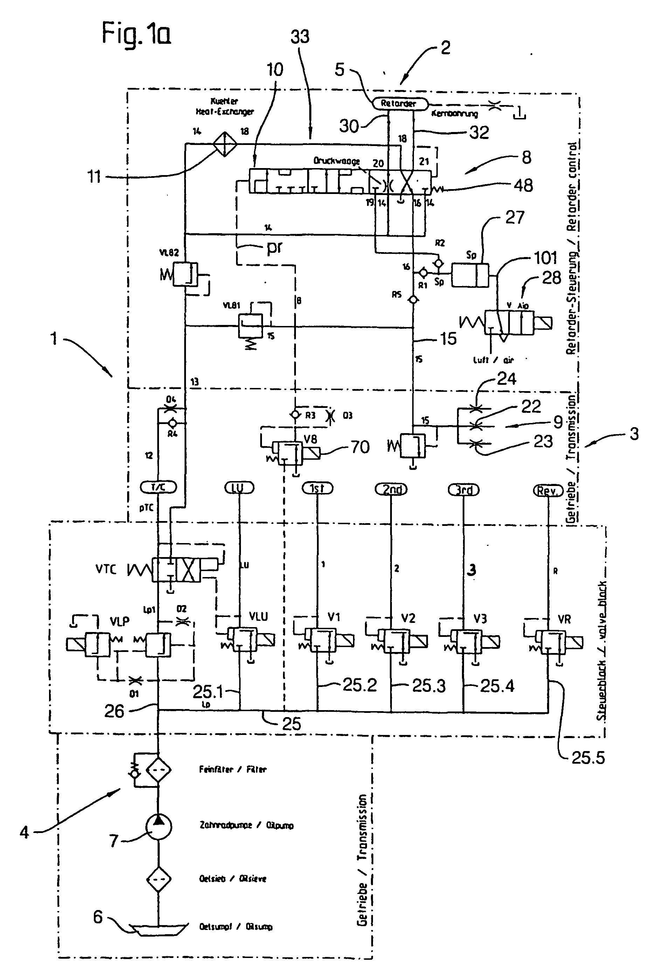

Die Figuren 1a bis 1c verdeutlichen in schematisch vereinfachter Darstellung anhand des Hydraulikplanes einen Ausschnitt aus einem Antriebssystem 1, umfassend mindestens ein hydrodynamisches Bauelement 2, einen Getriebeteil 3 und ein Schmiermittel bzw. Betriebsmittelversorgungssystem 4. Das hydrodynamische Bauelement 2 ist im dargestellten Fall als hydrodynamischer Retarder 5 ausgeführt. Dieser umfaßt, hier im einzelnen nicht dargestellt, wenigstens ein Rotorschaufelrad und ein Statorschaufelrad, welche miteinander einen torusförmigen Arbeitsraum bilden. Der hydrodynamische Retarder 5 kann vor, im oder wie in der Figur 1a verdeutlicht, hinter dem Getriebeteil 3 angeordnet werden. Der hydrodynamische Retarder 5 befindet sich dann auf der Abtriebsseite des Getriebes. Das Schmiermittel- bzw. Betriebsmittelversorgungssystem 4 umfaßt eine Betriebsmittelquelle 6, hier in Form eines Ölsumpfes, aus welchem mittels einer Pumpeinrichtung, hier der Zahnradpumpe 7 das ÖI in die entsprechenden Leitungssysteme zur Versorgung der einzelnen Elemente - hydrodynamisches Bauelement 2 und/oder Getriebeteil 3 - erfolgt.

Dem hydrodynamischen Retarder 5 ist erfindungsgemäß eine Steuereinrichtung 8 zugeordnet, welche neben der Steuerung einer den Funktionszustand des hydrodynamischen Retarders 5 wenigstens mittelbar charakterisierenden Größe, vorzugsweise des Füllungsgrades, verschiedene Versorgungsaufgaben, beispielsweise des Schmiermittelsystems 9 des Getriebeteiles 3 realisiert bzw. steuert. Die Steuereinrichtung 8 zur Steuerung einer den Funktionszustand des hydrodynamischen Retarders 5 wenigstens mittelbar charakterisierenden Größe ist vorzugsweise als Druckwaage 10 ausgeführt. Das Funktionsprinzip beruht dabei auf der Kompensation der auf einen Kolben bekannter Querschnittsfläche oder die Sperrflüssigkeit in einem Ringrohr wirkenden Druckkraft durch eine Gegenkraft, wobei durch Verschiebung beispielsweise des Kolbens ein Kräftegleichgewicht eingestellt wird. Dazu ist eine Sollgröße für eine, den Funktionszustand des hydrodynamischen Bauelementes wenigstens mittelbar charakterisierende Größe als Eingangsgröße einer, dem gemeinsam zugeordneten Schmiermittel- bzw. Betriebsmittelversorgungssystem 4 zugeordneten Steuereinrichtung 8 zur Ansteuerung einer Stelleinrichtung zur Beeinflussung der Betriebsmittelversorgung des hydrodynamischen Bauelementes 2 und der Schmiermittelversorgung 9 des Getriebeteils 3 vorgebbar. Die Stellgröße zur Betätigung der Stelleinrichtung wird dann aus dem Sollwert der den Funktionszustand des hydrodynamischen Bauelementes wenigstens mittelbar charakterisierende Größe in Abhängigkeit einer den Druck in einer Ablaufleitung 32 des hydrodynamischen Bauelementes 2 wenigstens mittelbar charakterisierenden Größe erzeugt.

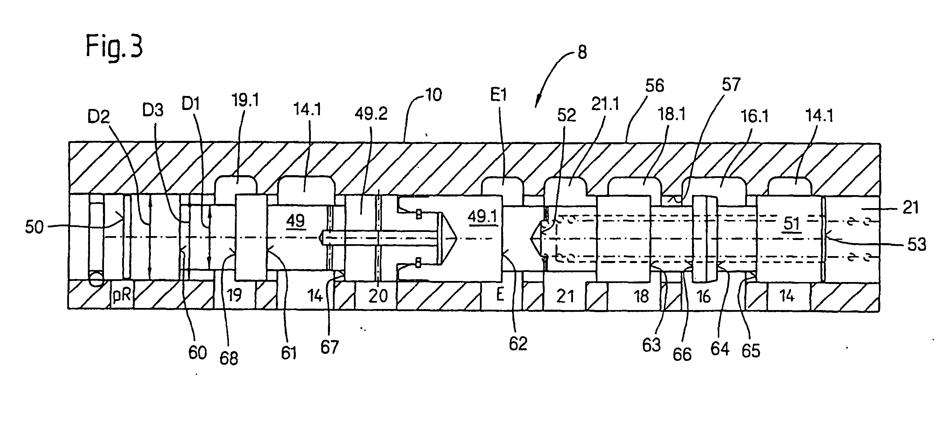

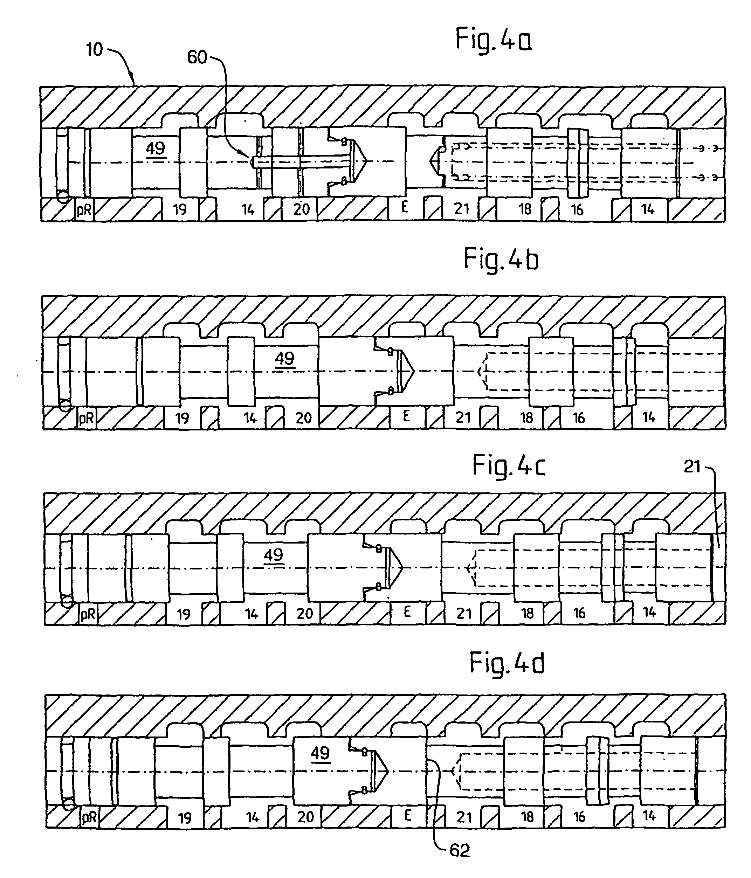

Über die Druckwaage 10 sind wenigstens drei Grundfunktionszustände des hydrodynamischen Retarders 5 einstellbar, vorzugsweise erfolgt die Verstellung jedoch stufenlos. Bezüglich des Aufbaus der Druckwaage 10 wird auf die Figuren 3 und 4 verwiesen.

In einem ersten Grundfunktionszustand des hydrodynamischen Bauelementes 2, hier des hydrodynamischen Retarders 5, wird Betriebsmittel von der Betriebsmittelquelle 6 über eine Kühleinrichtung 11 in das Schmiermittelsystem 9 des Getriebeteiles 3 eingespeist. Dieser Grundfunktionszustand ist in der Figur 1a dargestellt. Das Betriebsmittel, als welches vor allem Öl Verwendung findet, gelangt vom Ölsumpf 6 über die Leitung 13 in den sich daran anschließenden Leitungsabschnitt 14, die Kühleinrichtung 11 und die Leitung 18 in die Schmierleitung 15, welche mit den Schmiermittelanschlüssen 22, 23 und 24 des Schmiermittelversorgungssystems 9 des Getriebeteiles 3 gekoppelt ist. In diesem Grundfunktionszustand ist der hydrodynamische Retarder 5 vollständig entleert, es wird auch kein Betriebsmittel in den torusförmigen Arbeitsraum eingeführt. Vorzugsweise wird jedoch eine geringe Betriebsmittelmenge gezielt in den Arbeitsraum des hydrodynamischen Retarders eingespritzt, um die Ventilationsverluste abzusenken. Das zugeführte Betriebsmittel dient dann gleichzeitig der Schmierung der Dichtringe zwischen der Ablauf- und der Zulaufseite des hydrodynamischen Retarders 5 im ausgeschalteten Zustand. Der ausgeschaltete Zustand des hydrodynamischen Retarders 5 entspricht dem ersten Grundfunktionszustand. In diesem Zustand wird kein Bremsmoment erzeugt, und das Betriebsmittel wird lediglich zur Schmierung der einzelnen Elemente des Getriebeteils 3 benötigt. In der Schmierleitung 15 ist vorzugsweise ein Rückschlagventil R5 angeordnet, welches verhindert, daß das Betriebsmittel aus der Schmierleitung 15 zurückströmt.

Das vom Getriebeteil 3 und dem hydrodynamischen Bauelement 2 gemeinsam genutzte Schmiermittel- bzw. Betriebsmittelversorgungssystem versorgt auch die einzelnen Schaltelemente, hier die Schaltelemente LU, 1st, 2nd, 3rd und Rev. mit dem erforderlichen Steuerdruck. Im dargestellten Fall in der Figur 1a sind die Versorgungsleitungen, hier die Versorgungsleitung 25 und die von dieser abzweigenden Leitungen 25.1, 25.2, 25.3, 25.4 und 25.5 direkt an die Hauptversorgungsleitung 26 gekoppelt, welche die Pumpeinrichtung, hier die Zahnradpumpe 7, mit der Leitung 13 verbindet.

Dem hydrodynamischen Bauelement 2, hier dem hydrodynamischen Retarder 5, ist ein Speicher 27 zugeordnet. Der Speicher 27 ist vorzugsweise druckluftbetätigt. Zu diesem Zweck ist diesem ein Ventil 28 zugeordnet. Dieses Ventil wird nur kurz zum Zwecke des Befüllens des hydrodynamischen Bauelementes, insbesondere des hydrodynamischen Retarders 5, eingeschaltet und wieder ausgeschaltet.

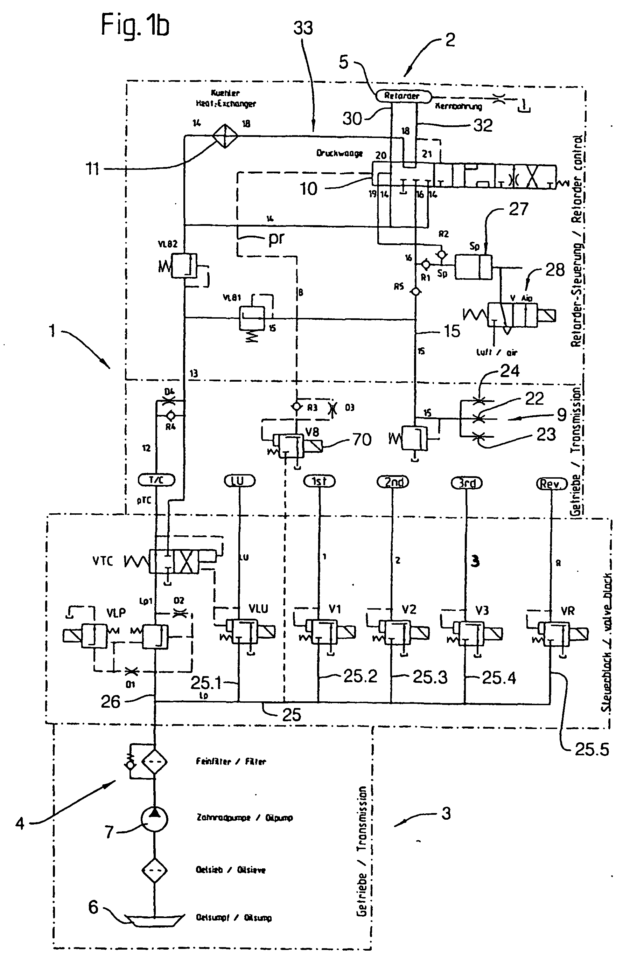

Der Zustand der Inbetriebnahme des hydrodynamischen Retarders 5, die sogenannte Füllphase, kann durch die in der Figur 1b mittels der Druckwaage 10 dargestellten bzw. realisierten Leitungsverbindungen beschrieben werden.

Der Füllvorgang erfolgt dabei im wesentlichen über den Speicher 27, welcher über eine Leitung 19 mit dem Zulauf 30 mittels der Druckwaage 10 koppelbar ist. Dabei ist vorzugsweise in der Leitung 19 eine Ventileinrichtung in Form eines Rückschlagventils R2 vorgesehen, welches den Betriebsmittelrücklauf aus dem hydrodynamischen Bauelement bzw. dem hydrodynamischen Retarder 5 in den Speicher 27 für den Fall, daß der Füllwiderstand größer wird als der zur Verfügung stehende Einschiebedruck, welcher mittels der Ventileinrichtung 28 aufgebracht wird, verhindert. Die Koppelung zwischen Druckwaage und Speicher wird über eine Leitung 16 realisiert. Die Leitung 16 ist des weiteren mit der Schmierleitung 15 des Getriebeteils 3 verbunden. Zur Verhinderung des Ausschiebens der Speichermenge in die Schmierleitung 15 und damit in das Schmiermittelsystem des Getriebeteils 3 ist eine Ventileinrichtung, beispielsweise das Rückschlagventil R1, in der Verbindungsleitung zwischen Speicher und Leitung 16 vorgesehen. Zusätzlich zur Befüllung über den Speicher 27 erfolgt eine Versorgung mit Betriebsmittel über die Betriebsmittelquelle 6. Das Betriebsmittel gelangt über die Hauptleitung 26 in die Verbindungsleitung 13 zu der mit dem Kühler gekoppelten Leitung 14. Das Betriebsmittel gelangt dann über die Leitung 14, die Koppelung zwischen der Leitung 14 mit der Leitung 20, welche mit dem Zulauf 30 des hydrodynamischen Retarders gekoppelt ist, in den hydrodynamischen Retarder 5. Zusätzlich wird in die mittels der Druckwaage 10 realisierten Verbindung zwischen der Leitung 14 und der Leitung 20 Betriebsmittel aus dem Speicher 27 eingespeist, indem die Leitung 19 ebenfalls mit der Leitung 20 gekoppelt ist. Infolge der sich einstellenden Druckdifferenzen im hydrodynamischen Retarder 5 tritt Betriebsmittel über den Ablauf 32 in die Leitung 21 und wird durch die diesen Funktionszustand charakterisierende Stellung bzw. Stellungen der Druckwaage 10 in die Verbindungsleitung zum Kühler 11 eingespeist und über diesen der Leitung 14 zugeführt, um erneut in den hydrodynamischen Retarder 5 eingespeist zu werden. Es bildet sich somit bereits während der Füllphase ein geschlossener Kühlkreislauf zwischen dem Ablauf 32 des hydrodynamischen Retarders 5 und dem Zulauf 30 aus. Dieser geschlossene Kreislauf kann auch als Kühlkreislauf bezeichnet werden und ist hier mit 33 gekennzeichnet. Der Kühlkreislauf 33 ist somit mit der Leitung 13 und damit der Zufuhrleitung von der Betriebsmittelquelle 6 zum hydrodynamischen Retarder 5 gekoppelt, wobei wie im vorliegenden Fall dargestellt, vorzugsweise gemeinsame Leitungen, hier ein Leitungsabschnitt der Leitung 14, genutzt werden. Der Betriebsmittelstrom zum Zwecke der Kühlung, d.h. der neben dem Arbeitskreislauf im Arbeitsraum des hydrodynamischen Retarders sich einstellende Kühlkreislauf 33, ist durch einen Richtungswechsel der Betriebsmittelströmung gegenüber der Führung des Betriebs- bzw. Schmiermittels im ersten Grundfunktionszustand des hydrodynamischen Retarders (Retarder AUS) charakterisiert.

Der Speicher 27 selbst weist bei Betätigung mittels Druckluft beispielsweise einen Speicherkolben 101 auf, der mit der Ventileinrichtung 28 gekoppelt ist und damit diesen auf einer Kolbenseite mit Druckluft beaufschlagt. Auf der anderen Seite des Speicherkolbens 101 befindet sich Betriebsmittel, welches in den Retarder 5 eingeschoben wird. Trotz vorhandener Dichteinrichtung kann sich nach einiger Betriebszeit Betriebsmittel auf der druckluftbeaufschlagten Seite des Kolbens 101 ansammeln. Es besteht dann die Gefahr, daß dieses Betriebsmittel über die Entlüftung des Ventiles 28 ins Freie austritt. Zur Vermeidung dieses Zustandes kann das Lecköl durch gezieltes Ablassen entfemt werden. Die druckluftbeaufschlagte Kolbenseite bildet dann einen Ölraum, der eine bestimmte Menge an Leckageöl aufnimmt, wobei dieses beispielsweise über eine Entleeröffnung im Ölraum abgelassen werden kann. Eine andere Möglichkeit besteht in der selbsttätigen Abführung der angesammelten Betriebsmittelmenge. In diesem Fall wird dem Luftkanal zum Betätigen des Kolbens, d.h. der Koppelung zwischen Speicher 27 und Ventileinrichtung 28 eine Verbindungsleitung mit dem Getriebeteil 3 zugeordnet, wobei in dieser beispielsweise eine Kugelventileinrichtung angeordnet ist. Sobald das angesammelte Betriebsmittel das Niveau des Kugelventiles übersteigt, wird mit jeder Retarderbetätigung kurzzeitig Betriebsmittel von der Luftseite des Speichers 27 in den Getriebeteil 3 geblasen. Dieser Effekt entsteht dabei durch Öffnung des Ventilsitzes durch die Kugel infolge der Schwerkraft bei ausgeschaltetem Pneumatikventil 28. Bei eingeschaltetem Pneumatikventil 28 schließt der plötzliche Luftstrom den Ventilsitz. Zwischen den Funktionszuständen des Kugelventiles mit geöffnetem und geschlossenem Ventilsitz strömt kurzzeitig eine gewisse Betriebsmittelmenge von der druckluftbeaufschlagten Kolbenseite zur Getriebeseite. Diese Betriebsmittelmenge ist durch die Länge des Weges, Anschrägung des Ventilsitzes sowie die Auslegung der Strömungsquerschnitte bestimmt und muß dabei sicher über der maximnal anfallenden Leckagemenge liegen, um zu gewährleisten, daß kein Betriebsmittel über das Pneumatikventil 28 austritt.

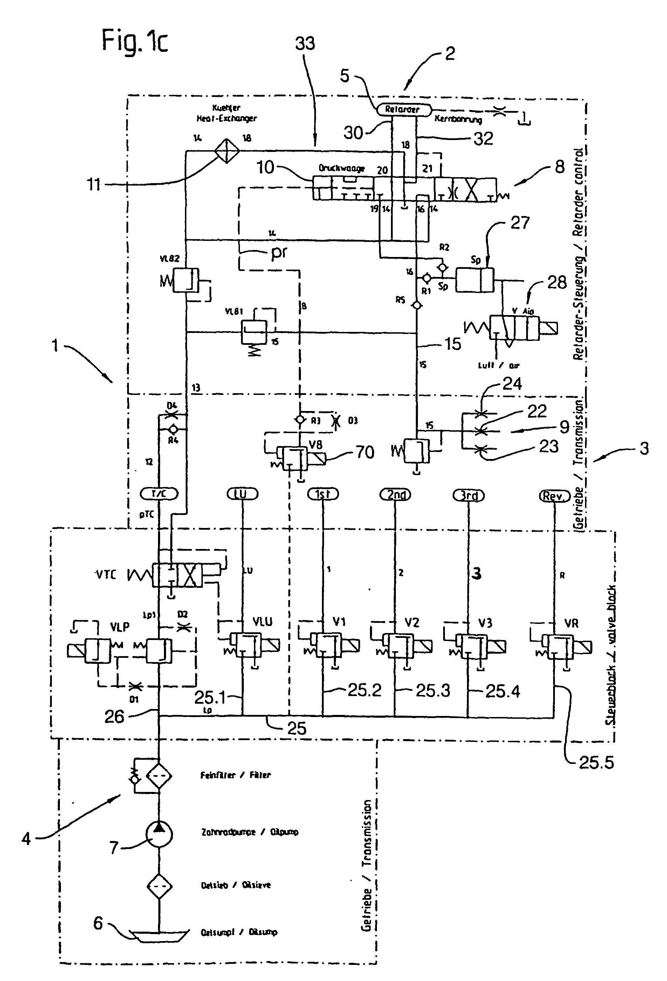

Ein weiterer dritter Grundfunktionszustand des hydrodynamischen Retarders 5 kann durch die Stellung der Druckwaage 10 und die dadurch realisierten Verbindungen zwischen den einzelnen Leitungen, wie in der Figur 1c dargestellt, beschrieben werden. Dieser Funktionszustand beschreibt den Regelzustand des hydrodynamischen Retarders 5. Die Leitungen 14 und 20 sind miteinander gekoppelt und damit mit dem Zulauf 30 des hydrodynamischen Retarders 5. Der Druck im Kanal 14 entspricht annähernd dem Zuflußwiderstand in der Leitung 20. Die Pumpeinrichtung in Form der Zahnradpumpe 7 fördert lediglich die Leckagemenge des hydrodynamischen Retarders nach. Überschüssiges Betriebsmittel, welches von der Pumpeinrichtung, insbesondere der Zahnradpumpe 7, gefördert wurde, gelangt von der Leitung 14 zum Leitungsabschnitt 16 und von diesem in die Schmiermittelleitung 15 zu den Schmiermittelanschlüssen 22 bis 24. Die Koppelung zwischen Zulauf des Retarders 30 und Speicher 27 ist unterbrochen. Aufgrund der sich einstellenden Druckdifferenzen im hydrodynamischen Retarder 5 wird auch hier ein Kühlmittelkreislauf 33 erzeugt, wobei das Kühlmittel vom Ablauf 32 in die Verbindungsleitung 18 zur Kühleinrichtung 11 gelangt und nach Passieren der Kühleinrichtung 11 der Zufuhrleitung 14 zugeführt wird und in den Zulauf 30 des hydrodynamischen Retarders eingespeist wird, wobei bei überschüssigem Betriebsmsittel ein Teil über die Leitung 16 in das Schmiermittelsystem 9 des Getriebeteiles 3 geleitet wird. Dieser dritte Grundfunktionszustand kann noch einmal in einen weiteren vierten Grundfunktionszustand unterteilt werden, welcher für die Einstellung von sehr geringen Retarderdrücken, d.h. der Erzeugung eines geringeren Bremsmomentes, erforderlich ist. In diesem Funktionszustand wird der Zulaufdruck unter das Niveau des Druckes in der Leitung 16 abgesenkt.

Bezüglich den einzelnen Stellungen des Steuerschiebers der Druckwaage 10 zur Realisierung der einzelnen Funktionszustände wird auf die noch zu beschreibenden Figuren 4a bis 4d verwiesen.

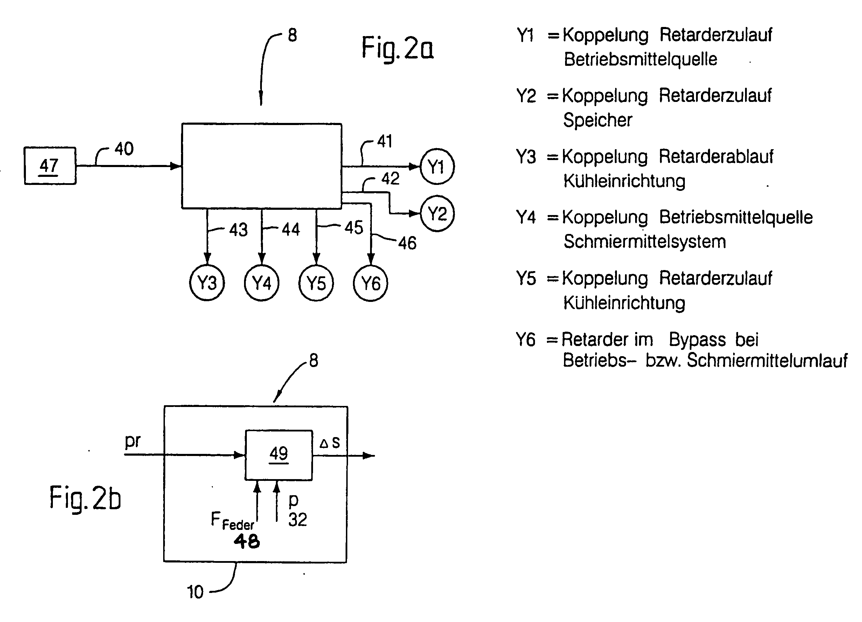

Die Funktion der Steuereinrichtung 8 gemäß den Figuren 1a bis 1c ist in Form eines Blockschaltbildes in Fig. 2a verdeutlicht. Demnach weist die Steuereinrichtung 8 wenigstens einen Eingang 40 auf und sechs Ausgänge 41 bis 46. Der Eingang 40 ist dabei mit einer Einrichtung 47 zur Vorgabe eines Sollwertes für eine den Funktionszustand des hydrodynamischen Retarders wenigstens mittelbar charakterisierenden Größe koppelbar. Entsprechend der vorgegebenen Sollgröße bildet die Steuereinrichtung 8 Stellgrößen, hier die einzelnen Stellgrößen Y1 bis Y6, zur Einstellung des gewünschten Funktionszustandes. Bei der Bildung der Stellgrößen wird dabei dem Aspekt Rechnung getragen, daß das Betriebsmittel- bzw. Schmiermittelversorgungssystem nicht nur dem hydrodynamischen Retarder zugeordnet ist, sondern auch die Aufgabe hat, den Getriebeteil 3 entsprechend mit Schmiermittel bzw. die einzelnen Getriebeelemente mit entsprechendem Steuerdruck zu versorgen. Im einzelnen bedeutet dies, daß entsprechend der gebildeten Sollgrößen die entsprechenden Kopplungen zwischen Retarderzulauf, Retarderablauf, Kühleinrichtung, Betriebsmittelquelle, Schmiermittelsystem und Speicher realisiert werden müssen. Dies kann beispielsweise über eine Vielzahl von Ventileinrichtungen erfolgen, welche in dem gemeinsam genutzten Leitungssystem entsprechend anzuordnen sind. Eine bevorzugte, besonders vorteilhafte Ausführung der Steuereinrichtung ist schematisch in vereinfachter Darstellung in den Figuren 1a bis 1 c wiedergegeben. Das Blockschaltbild für diese Einrichtung ist Figur 2b zu entnehmen. Als Eingangsgröße der Steuereinrichtung 8, welche als Druckwaage 10 ausgeführt ist, fungiert der sogenannte Steuerdruck pᵣ. Dieser wirkt auf die Kolbenfläche eines sogenannten Steuerkolbens, welcher als Übertragungsglied 49 fungiert. Weitere Eingangsgrößen sind die durch eine Energiespeichereinheit 48, welche beispielsweise in Form einer Federspeichereinrichtung ausgeführt ist, aufgebrachte Kraft F₄ und der im Ablauf 32 des hydrodynamischen Retarders 5 herrschende Druck p₃₂. Aus diesen Eingangsgrößen wird als Ausgangsgröße eine Verschiebung des Steuerkolbens 49 und damit der Steuerkanten gegenüber den einzelnen Leitungsanschlüssen um einen Weg Δs realisiert. Die entsprechende Stellung des Steuerkolbens 49 bedingt dann durch die Koppelung einzelner Leitungsabschnitte bzw. Leitungen miteinander die Funktionszustände des hydrodynamischen Retarders. Die konkrete konstruktive Ausführung der Druckwaage 10 ist anhand eines Beispiels in der Figur 3 beschrieben.

Die Figur 3 verdeutlicht eine Möglichkeit der konstruktiven Ausführung der erfindungsgemäß eingesetzten Druckwaage 10 als Steuereinrichtung 8 in einer Schnittdarstellung. Diese umfaßt ein Gehäuse 56, in welches wenigstens eine Steuerbohrung 57 eingearbeitet ist. Die Steuerbohrung 57 weist über ihre axiale Erstreckung betrachtet unterschiedliche Durchmesser auf. Diese bilden einzelne Steuerkammern, welche entsprechend den Anschlüssen mit 19.1, 14.1, 20e.1, 21.1, 18.1, 16.1 und 14.1 bezeichnet sind. In der Steuerbohrung 57 ist ein Steuerkolben 49 angeordnet, welcher in axialer Richtung verschiebbar ist und der über seine axiale Erstreckung unterschiedliche Durchmesser aufweist. Die einzelnen Teilbereiche unterschiedlichen Durchmessers bilden miteinander Steuerkanten. Die Steuerkanten sind hier mit 60, 61, 62, 63, 64, 65, 53, 67 und 68 bezeichnet.

Die Bereiche unterschiedlichen Außendurchmessers des Steuerkolbens 49 wechseln sich dabei alternierend ab. Vorzugsweise ist der Steuerkolben derart ausgeführt, daß dieser über die axiale Länge betrachtet lediglich zwei unterschiedliche Durchmesser aufweist, einen ersten Durchmesser D1, welcher kleiner dem Durchmesser D3 der Steuerbohrung ausgeführt ist. Der zweite Durchmesser D2 des Steuerkolbens 49 entspricht im wesentlichen dem Durchmesser D3 der Steuerbohrung 57 unter Berücksichtigung entsprechender Toleranzen, welche zur Realisierung einer axialen Verschiebbarkeit des Steuerkolbens 49 in der Steuerbohrung 57 erforderlich sind. Entsprechend der Stellung des Steuerkolbens 49, insbesondere der Steuerkanten in der Steuerbohrung 57, werden die einzelnen Anschlüsse wenigstens teilweise oder ganz freigegeben oder verdeckt, wodurch die einzelnen Funktionszustände des hydrodynamischen Retarders 5 und die Funktion der Versorgung des Schmiermittelsystems des Getriebeteils 3 realisiert werden. Die einzelnen Anschlüsse sind dabei wie folgt den entsprechenden Leitungen im Schmiermittelsystem zugeordnet:

| | | |
|---|---|---|
| 1. | Anschluß 14 - | Betriebsmittelversorgungsquelle 6 und Kühleinrichtung 11 |
| 2. | Anschluß 19 - | Speicher 27 |
| 3. | Anschluß 20 - | Zulauf 30 des hydrodynamischen Retarders 5 |
| 4. | Anschluß 21 - | Ablauf 32 des hydrodynamischen Retarders 5 |
| 5. | Anschluß 18 - | Kühleinrichtung 11 |
| 6. | Anschluß 16 - | Schmiermittelleitung 15 |

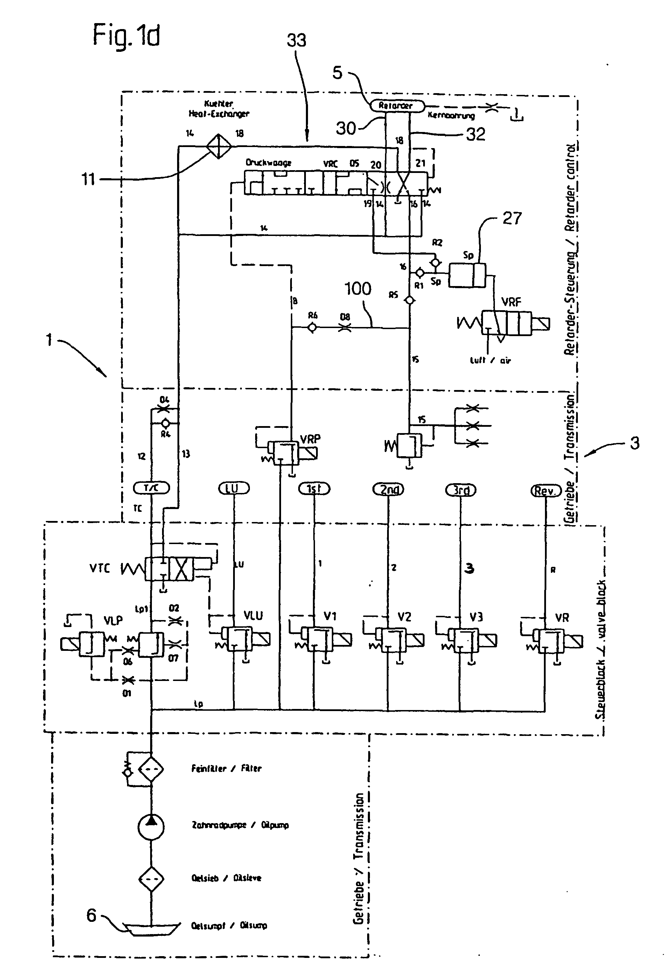

Die entsprechenden Anschlußbezeichnungen entsprechen dabei den in der Figur 1 genannten Leitungsbezeichnungen. Des weiteren ist ein weiterer Anschluß für den Steuerdruck pR vorgesehen. Dieser wirkt auf die Fläche 50 des Steuerkolbens 49. Zur Realisierung der Funktion der Druckwaage ist die durch den Druck pR auf die Fläche 50 gerichteten Kraft eine Gegenkraft zugeordnet, welche sich aus der Kraft einer Federspeichereinrichtung 48 und der durch den im Ablauf 32 des hydrodynamischen Retarders 5 herrschenden Druckes in der Ablaufleitung 21 auf die Kolbenfläche 53 gebildeten Kraft zusammensetzt. Die Federspeichereinrichtung 48 ist dabei in einer entsprechenden Bohrung 51 im Steuerkolben 49 angeordnet. Die Feder stützt sich auf der Bohrungsinnenfläche 52 der Bohrung 51 im Steuerkolben 49 ab.

Der Steuerkolben ist, wie im vorliegenden Fall dargestellt, vorzugsweise wenigstens zweiteilig ausgeführt. Dieser umfaßt einen ersten Teil 49.1 und einen zweiten Teil 49.2. Dies bietet den Vorteil einer rationelleren Fertigung der Steuerbohrung durch Bearbeitung von zwei Seiten.

Für die in der Figur 3 dargestellte Ausführung der Druckwaage sind in den Figuren 4a bis 4d die einzelnen Funktionszustände, wie sie für die Figuren 1a bis 1c beschrieben wurden, anhand der Stellungen der Steuerkanten in der Steuerbohrung 57 dargestellt. Die Figur 4a verdeutlicht dabei den ersten Grundfunktionszustand, in welchem der hydrodynamische Retarder 5 nicht in Betrieb, d.h. ausgeschaltet ist. In diesem Zustand ist der Ablauf 32 über die Leitung 21 und damit den Anschluß 21 mit der Entlastungseinrichtung E verbunden. Des weiteren wird über den Anschluß 16 Schmiermittel bzw. Betriebsmittel von der Betriebsmittelquelle 6 in die Schmiermittelleitung 15 geleitet, weshalb der Anschluß 18 mit dem Anschluß 16 in diesem Zustand in Strömungsverbindung steht. Der Betriebsmittelstrom wird somit lediglich, wie in der Figur 1a bereits beschrieben, über die Kühleinrichtung in die Schmiermittelleitung 15 geleitet. In diesem Zustand, in welchem der hydrodynamische Retarder 5 in der Regel vollständig entleert ist, können bei nicht entkoppelbarem Rotorschaufelrad Ventilationsverluste in dieser Betriebsweise auftreten. Zur Vermeidung der Ventilationsverluste wird ein geringer Teil an Betriebsmittel in den Arbeitsraum des hydrodynamischen Retarders 5 eingespritzt. Diese geringe gezielte Betriebsmittelzufuhr erfolgt über eine Drossel 60, wie in der Figur 4a dargestellt. Diese ermöglicht einen Betriebsmittelübertritt von der Leitung 14 zum Anschluß 20 und damit zu dem mit diesem gekoppelten Zulauf 30 des hydrodynamischen Retarders 5.

In der Figur 4b ist die Stellung des Steuerkolbens 49 für den zweiten Grundfunktionszustand des hydrodynamischen Retarders 5 dargestellt. Dieser Bereich wird auch als Inbetriebnahmebereich des hydrodynamischen Retarders oder aber Füllphase bezeichnet. Die Füllung erfolgt dabei vorzugsweise über den Speicher 27 und damit die Leitungen bzw. Anschlüsse 19 und 20 sowie zusätzlich über die Leitung bzw. den Anschluß 14 von der Betriebsmittelquelle zur Leitung 20, welche mit dem Zulauf 30 des hydrodynamischen Retarders gekoppelt ist. Das Betriebsmittel kann somit, wie in der Figur 4b dargestellt, vom Anschluß 19 in den Anschluß 20 übertreten. Der Ablauf 32 des hydrodynamischen Retarders 5, welcher mit dem Anschluß 21 gekoppelt ist, steht in dieser Funktionsweise in Strömungsverbindung mit dem Anschluß 18, welcher mit der Kühleinrichtung 11 gekoppelt ist. Die beiden in axialer Richtung außenliegenden Anschlüsse 16 und 14 sind jeweils gesperrt.

Die Figur 4c verdeutlicht die Stellung des Steuerkolbens 49 im Regelzustand des hydrodynamischen Retarders, wobei der Steuerkolben mit der Steuerkante 64 die Sperrung zwischen den Anschlüssen 14 und 16 verläßt. Eine Strömungsverbindung besteht zwischen den Anschlüssen 14 und 20 sowie zwischen 21 und 18 zum Zwecke der Realisierung eines Kühlkreislaufes, wobei die Einspeisung in den Arbeitsraum des hydrodynamischen Retarders bzw. zum Zulauf 30 über die Kopplung der Anschlüsse 14 und 20 erfolgt. Die Kopplung mit dem Speicher, insbesondere die Kopplung zwischen den Anschlüssen 19 und 14, ist unterbrochen. Der hydrodynamische Retarder 5 wird somit nur mit dem Betriebsmittel vom Speicher versorgt, welches er zum Erreichen seines Regelzustandes benötigt.

Der Regelzustand bzw. der Beginn dieses Regelzustandes ist dabei von der Überdeckung der Steuerkante 64 mit der entsprechenden Steuerkante in der Steuerbohrung 57 zwischen den Anschlüssen 16 und 14 gekennzeichnet. Der Bereich des Regelzustandes läßt sich dabei des weiteren durch die in Fig. 4d dargestellte Stellung des Steuerkolbens 49 begrenzen. Während sich die Füllphase des hydrodynamischen Retarders 5 dadurch auszeichnet, daß der Steuerkolben 49 eine Bewegung in axialer Richtung in Richtung des auf die Steuerkolbenfläche 50 wirkenden Steuerdruckes pR erfährt, erfährt der Steuerkolben 49 im Regelzustand eine Bewegung in axialer Richtung entgegen der Wirkrichtung des Steuerdruckes pR. Die beiden Grenzstellungen zur Beschreibung des Regelzustandsbereiches sind in der Figur 4c und 4d dargestellt. Die in der Figur 4d dargestellte zweite Grenz- bzw. Regelstellung zeichnet sich dadurch aus, daß die Steuerkante 62 des Steuerkolbens 49 die Endstellung einnimmt, in welcher die Entlastungsleitung mit der Anschlußleitung 21 und damit dem Ablauf 32 des hydrodynamischen Retarders verbunden ist. Über den gesamten Regelzustand erfolgt jedoch ein Betriebsmittelumlauf vom Ablauf 32 des hydrodynamischen Retarders 5 zur Kühleinrichtung über die Leitung 21 zum Anschluß 18 und nach Passieren der Kühleinrichtung erneut zum Zulauf 30 des hydrodynamischen Retarders über die Leitung bzw. Anschlüsse 14 und 20. Des weiteren wird kurz nach Erreichen des Regelzustandes eine Betriebsmittelversorgung zur Schmiermittelleitung 15 des Getriebeteils 3 realisiert.

Die Steuereinrichtung 8, insbesondere die Druckwaage 10, welche über einen Steuerdruck pR, welcher beispielsweise wie in den Figuren 1a bis 1c dargestellt, über ein Proportionalventil 70 eingestellt wird, angesteuert wird, ermöglicht die Kopplung der einzelnen Leitungsabschnitte bzw. der einzelnen Leitungen miteinander in entsprechender Art und Weise, um den hydrodynamischen Retarder 5 in entsprechende Funktionszustände zu bringen. Des weiteren sind dem gemeinsam genutzten Schmier- bzw. Betriebsmittelversorgungssystem Mittel zugeordnet, welche im Zusammenwirken mit der Steuereinrichtung 8 bestimmte Funktionen im Betriebs- bzw. Schmiermittelversorgungssystem vorrangig erfüllen. Entsprechend der zu erfüllenden Aufgabenstellung können diese Mittel unterschiedlich konzipiert und ausgelegt werden. In den Figuren 1a bis 1c sind zur Verhinderung von Einbrüchen in der Schmierölversorgung des Getriebeteils 3 während des Retarderbetriebes, d.h. während des Funktionszustandes FÜLLEN bzw. des Regelzustandes die Ventile VLB1 und VLB2 sowie R5 angeordnet. Bei der Ventileinrichtung VLB2, welche in der Verbindungsleitung zwischen der Hauptverbindungsleitung zwischen dem Ölsumpf 6 und der Leitung 14 angeordnet ist, handelt es sich um ein Druckbegrenzungsventil. Die Ventileinrichtung VLB1, die in einer Verbindungsleitung zwischen der Schmierölleitung und der Hauptleitung 13 angeordnet ist, ist als Druckminderventil ausgeführt. Die Ventileinrichtung R5 ist als Rückschlagventil konzipiert. Beim Absinken des Druckes in der Schmierölleitung 15 unter ein bestimmtes Niveau verbindet die Ventileinrichtung VLB1, d.h. das Druckminderventil, die Hauptleitung 13 und damit die Betriebsmittelversorgungsquelle mit der Schmierleitung 15. Der hydrodynamische Retarder 5 befindet sich dann bezüglich der Betriebsmittelversorgung in einem Bypass. Dabei ist es unerheblich, in welchem Funktionszustand sich der hydrodynamische Retarder bereits befindet. Die Ventileinrichtung VLB2 erzeugt einen leichten Druckstau, damit der erforderliche Schmierölstrom von der Hauptleitung 13 über VLB1 nach der Schmierleitung 15 stattfinden kann.

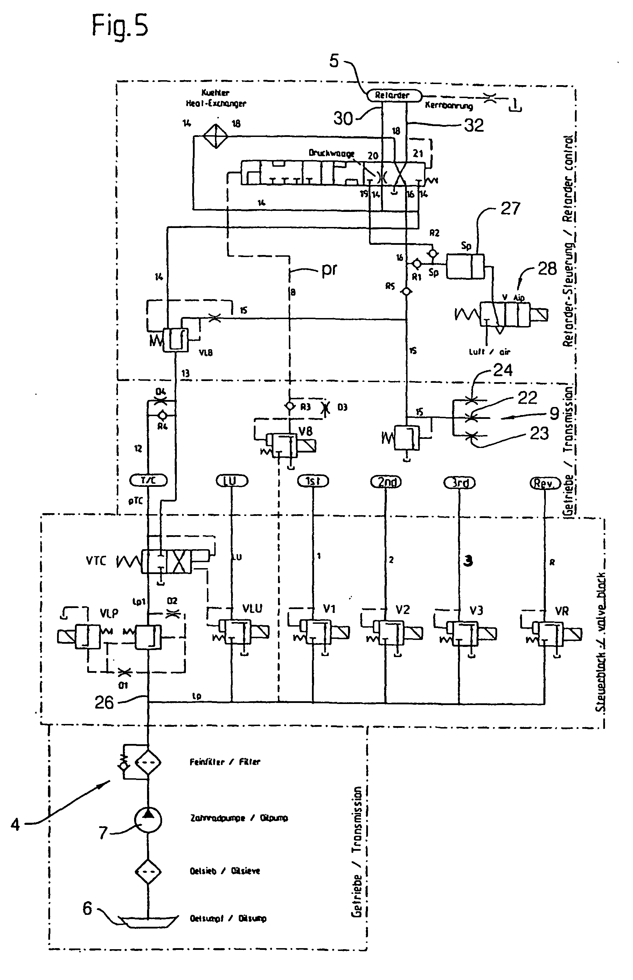

Während die Ausführung entsprechend den Fig. 1a bis 1c mit den Ventilen VLB1 und VLB2 immer einen gewissen Druck im Schmiersystem des Getriebes während des Retarderbetriebes gewährleisten, verdeutlicht die Fig. 5 eine andere Möglichkeit der Versorgung des Schmiermittelsystems des Getriebeteils 3 über einen Mengenregler, welcher eine bestimmte Ölmenge, die über eine Drossel oder Feder eingestellt werden kann, in das Schmiersystem 15 leitet und zwar unabhängig von den vorherschenden Druckverhältnissen. Die Ventileinrichtungen VLB1 und VLB2 werden dazu durch eine Ventileinrichtung VLB ersetzt.

Eine alternative Möglichkeit der konstruktiven Ausgestaltung des Betriebs- bzw. chmiermittelversorgungssystems 4 zur Gewährleistung der Schmierung des Getriebeteils 3 während der Retarderfüllung ist in Fig. 1d dargestellt. Der Grundaufbau des Gesamtsystems - Retarder 5, Getriebeteil 3 ausgenommen jedoch die Ventileinrichtungen VLB1 und VLB2 entspricht dabei dem in den Fig. 1a-1c beschriebenen, weshalb für gleiche Elemente die gleichen Bezugszeichen verwendet werden. Dabei wird eine mininimale Schmiermittelversorgung, die über eine Drossel D8 oder alternativ eine Feder eingestellt werden kann, im Schmiermittelversorgungssystem 15 unabhängig von den vorhandenen Drücken gewährleistet. Desweiteren ist zur Realisierung dieser Funktion ein Rückschlagventil R6 vorgesehen. Die Drossel D8 und das Rückschlagventil R6 sind dazu in einer Verbindungsleitung 100 zwischen der Schmiermittelversorgungsleitung 15 und der Verbindungsleitung 8 vom Proportionalventil 70 zur Sollwertvorgabe bzw. Erzeugung eines Sollwertsignales in Form eines Druckes für einen gewünschten Funktionszustand des hydrodynamischen Retarders 5 mit der Steuereinrichtung 8, insbesondere der Druckwaage 10 angeordnet. Diese Anordnung bietet den Vorteil, daß die Einrichtung nur im Retarderbetrieb wirksam ist, und so im Fahrbetrieb kein Kühlöl verlorengeht. Desweiteren besteht die Möglichkeit, die in der Fig. 1d beschriebene Konfiguration sehr kostengünstig für bereitzustellen.

Die Drucksteuerung des hydrodynamischen Bauelementes, insbesondere des Retarders 5, ist dabei derart ausgeführt, daß im Retarderbetrieb die Schmierung des Getriebes direkt aus dem Sumpf 6 erfolgt, da dort das kälteste betriebsmittel zur Verfügung steht. Das Betriebsmittel gelangt von der Betriebsmittelquelle 6 zur Retardersteuerung, wo eine geringe Menge zum Ausgleich von Undichtheiten abgezweigt wird, während der Hauptanteil der Schmierung 15 des Getriebeteils 3 zufließt.

Die Steuereinrichtung, insbesondere die Druckwaage und die mit dieser gekoppelten bzw. in einer Baueinheit integrierten Ventileinrichtungen können unterschiedlich hinsichtlich der in der Steuerbohrung gebildeten Kammern, der Steuerkanten des Steuerkolbens und der Zuordnung der Anschlüsse zu diesen ausgeführt sein. Wesentlich ist jedoch, daß die vier Grundfunktionszustände der Steuerung des hydrodynamischen Bauelementes erfüllt werden, wobei wenigstens im Regelzustand stufenweise und vorzugsweise ein stufenloser Übergang zwischen den einzelnen Grundfunktionszuständen erzielt wird.

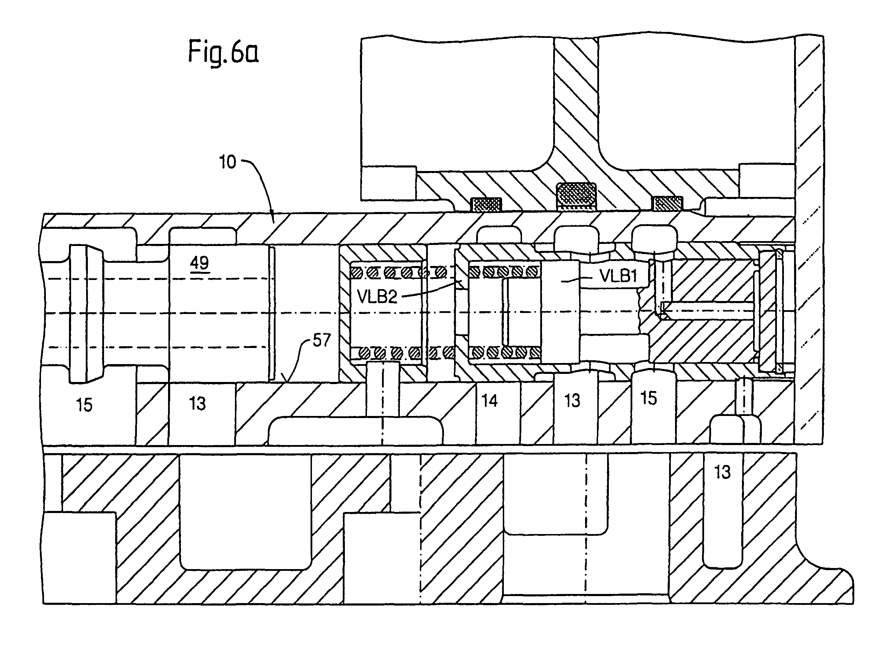

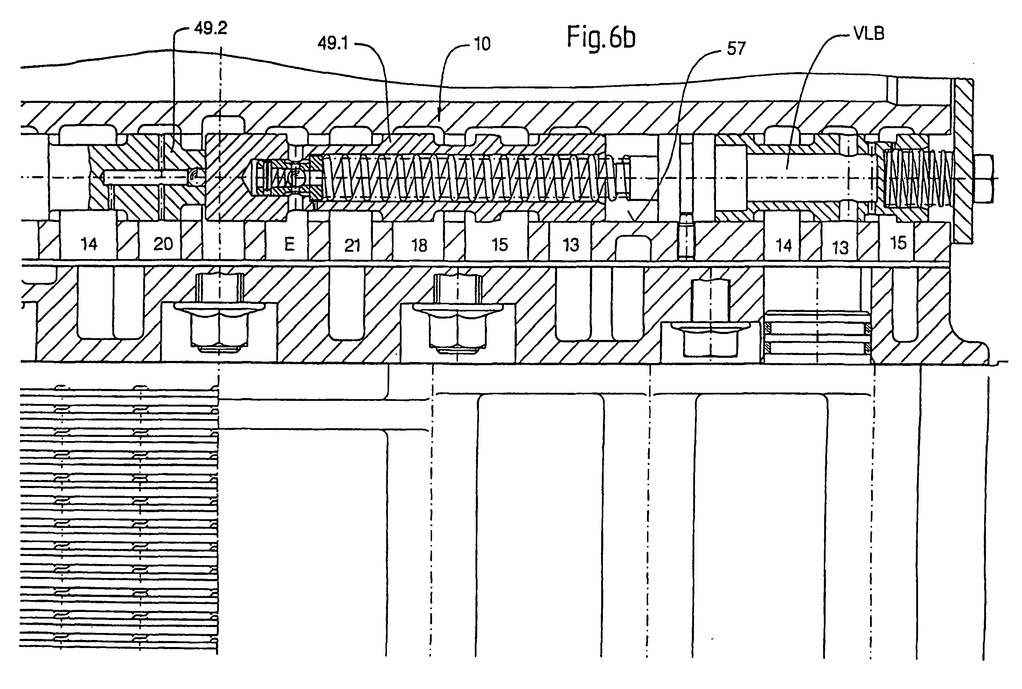

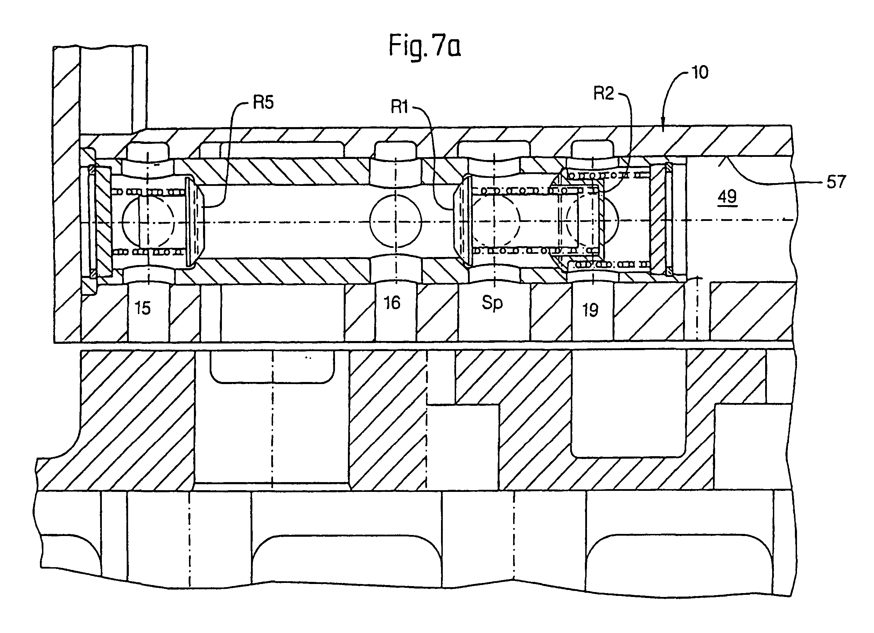

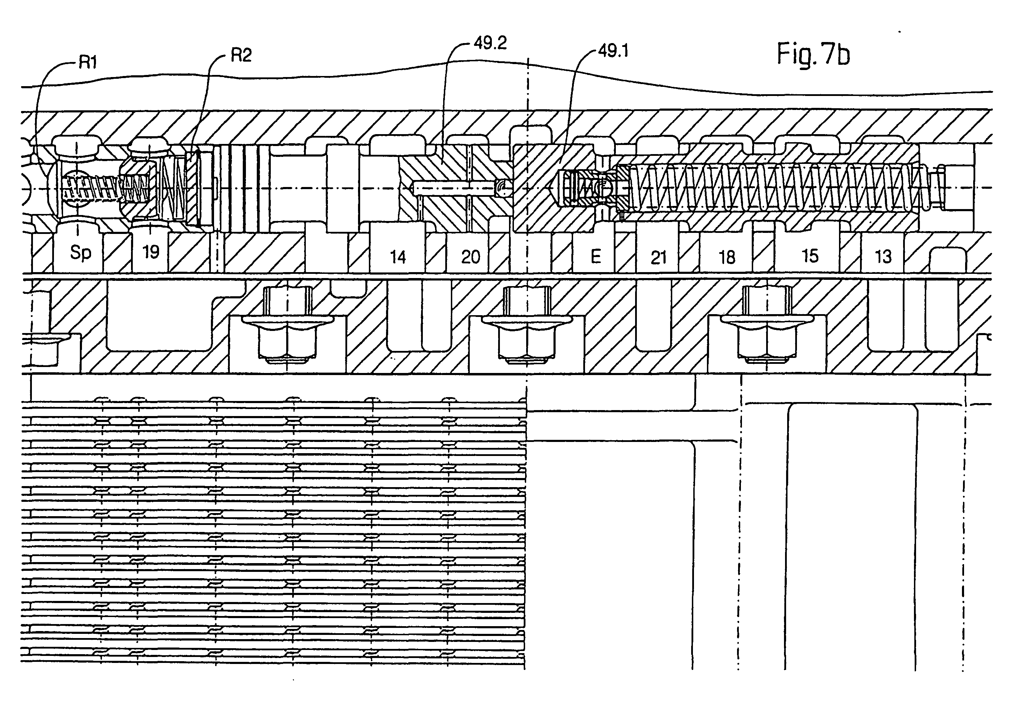

Die Figuren 6 und 7 verdeutlichen anhand eines Ausschnittes aus der Druckwaage 10 die Möglichkeiten der Anordnung einzelner. Ventileinrichtungen, wie beispielsweise VLB1 und VLB2, sowie den Mengenregler VLB in der Steuerbohrung 57. Während Fig. 6a anhand eines Ausschnittes aus der Druckwaage 10 die Anordnung der Ventileinrichtungen VLB1 und VLB2 in der Steuerbohrung 57 wiedergibt, ist in Fig. 6b neben der Anordnung des Mengenreglers VLB in der Steuerbohrung 57 eine Ausführung des Steuerkolbens 49 dargestellt, welche zweiteilig ist.

Die Fig. 7a zeigt demgegenüber die Anordnung der Rückschlagventile R1, R2 und R5 im Steuerkolben 49 für eine Ausführung entsprechend Fig. 6a und die Fig. 7b für eine Ausführung des Steuerkolbens 49 entsprechend Fig. 6b. Diese Anordnung erfolgt dabei derart, daß die Rückschlagventileinrichtungen Einfluß auf die Leitungsquerschnitte entsprechend der in Figur 1 dargestellten Art und Weise ausüben können, d.h. diese sind den entsprechenden Leitungen zugeordnet.

## Patentansprüche

1. Verfahren zur Steuerung der Befüllung eines hydrodynamischen Bauelementes (2) in einer Antriebseinheit mit mindestens einem Getriebeteil (3) und einem beiden gemeinsam zugeordneten Schmiermittel- bzw. Betriebsmittelversorgungssystem (4), umfassend wenigstens eine Betriebsmittelquelle (6), eine Kühleinrichtung (11) und eine Speichereinrichtung, wobei das hydrodynamische Bauelement (2) mindestens zwei Schaufelräder umfaßt, welche miteinander einen torusförmigen Arbeitsraum bilden, dem wenigstens eine Zulaufleitung (30) und ein Ablaufleitung (32) zugeordnet sind;
**gekennzeichnet durch** die folgenden Schritte:
1.1 eine Sollgröße für eine, den Grundfunktionszustand des hydrodynamischen Bauelementes (2) wenigstens mittelbar charakterisierende Größe als Eingangsgröße ist einer, dem gemeinsam zugeordneten Schmiermittel- bzw. Betriebsmittelversorgungssystem (4) zugeordneten Steuereinrichtung (8) zur Ansteuerung einer Stelleinrichtung zur Beeinflussung der Betriebsmittelversorgung des hydrodynamischen Bauelementes (2) derart vorgegeben, daß wenigstens drei Grundfunktionszustände des hydrodynamischen Bauelementes (2) einstellbar sind, wobei in einem Sollfunktionszustand zusätzlich eine Versorgung des Schmiermittelsystems des Getriebeteiles (3) einstellbar ist, und wobei die Stellgröße zur Betätigung der Stelleinrichtung aus der Sollgröße der den Funktionszustand des hydrodynamischen Bauelementes wenigstens mittelbar charakterisierende Größe in Abhängigkeit des Druckes in der Ablaufleitung (32) oder einer den Druck in der Ablaufleitung (32) des hydrodynamischen Bauelementes (2) wenigstens mittelbar charakterisierenden Größe erzeugt wird;
1.2 in einem ersten Grundfunktionszustand des hydrodynamischen Bauelementes (2) wird Betriebsmittel von der Betriebsmittelquelle (6) über die Kühleinrichtung (11) dem Schmiermittelanschluß (15) des Getriebeteiles (3) zugeführt;
1.3 in einem zweiten Grundfunktionszustand des hydrodynamischen Bauelementes (2) dem Arbeitsraum des hydrodynamischen Bauelementes (2) wird Betriebsmittel vom Speicher (27) und der Betriebsmittelquelle (6) zugeführt wird und in einem geschlossenen Kreislauf Betriebsmittel aus dem Arbeitsraum über die Kühleinrichtung (11) dem Arbeitsraum wieder zu geführt;
1.4 in einem dritten Grundfunktionszustand ist der Druck in der Ablaufleitung (32) vom Arbeitsraum veränderlich einstellbar und dem Arbeitsraum des hydrodynamischen Bauelementes (2) wird Betriebsmittel vom Speicher (27) und der Betriebsmittelquelle (6) zugeführt wird und in einem geschlossenen Kreislauf Betriebsmittel aus dem Arbeitsraum über die Kühleinrichtung (11) dem Arbeitsraum wieder zugeführt.

2. Verfahren nach Anspruch 1, **dadurch gekennzeichnet, daß** im dritten Sollfunktionszustand zwei Grenzzustände unterschieden werden, ein erster Grenzzustand für hohe Drücke und ein zweiter Grenzzustand für niedrige Drücke.

3. Verfahren nach Anspruch 1 oder 2, **dadurch gekennzeichnet, daß** wenigstens im dritten Grundfunktionszustand die Änderung des Druckes in der Ablaufleitung (32) zum Arbeitsraum stufenlos einstellbar ist.

4. Verfahren nach einem der Ansprüche 1 bis 3, **dadurch gekennzeichnet, daß** der Übergang zwischen den einzelnen Funktionszuständen stufenlos einstellbar ist.

5. Verfahren nach einem der Ansprüche 1 bis 4, **dadurch gekennzeichnet, daß** die Versorgurig des hydrodynamischen Bauelementes (2) mit Betriebsmittel vorrangig vor der Versorgung des Getriebeteils (3) mit Schmiermittel erfolgt.

6. Steuervorrichtung zur Beeinflussung des Funktionszustandes eines hydrodynamischen Bauelementes (2) zur Durchführung eines Verfahrens gemäß einem der Ansprüche 1 bis 5 in einer Antriebseinheit (1) mit mindestens einem Getriebeteil (3) und einem, beiden zugeordneten Schmiermittel- bzw. Betriebsmittelversorgungssystem (4), umfassend wenigstens eine Betriebsmittelquelle (6), eine Kühleinrichtung (11) und eine Speichereinrichtung (27), wobei das hydrodynamische Bauelement (2) mindestens zwei Schaufelräder, welche miteinander einen torusförmigen Arbeitsraum bilden und eine Zulaufleitung (30) und eine Ablaufleitung (32) umfaßt;
**gekennzeichnet durch** die folgenden Merkmale:
6.1 mit einer gemeinsamen Steuereinrichtung (8) mit wenigstens einem Eingang für eine den Grundfunktionszustand wenigstens mittelbar charakterisierende Größe und einer Mehrzahl von Ausgängen;
6.2 die Ausgänge sind mit Mitteln zur Beeinflussung der Zu- und/oder Ablaufleitung (30, 32) des hydrodynamischen Bauelementes und/oder den Leitungen (15) des Schmiermittelversorgungssystems (9) des Getriebeteils (3) gekoppelt;
6.3 die Steuereinrichtung (8) umfaßt eine Druckwaage (10);
6.4 die Druckwaage (10) weist wenigstens eine Steuerbohrung (57) auf;
6.5 die Steuerbohrung (57) ist mit wenigstens den folgenden als Ausgang fungierenden Anschlüssen wenigstens mittelbar verbunden:
- Zulauf (30) des hydrodynamischen Bauelementes (2)
- Ablauf (32) des hydrodynamischen Bauelementes (2)
- Schmiermittelversorgungsleitung (15)
- Betriebsmittelversorgungsquelle (6)
6.6 die Druckwaage (10) weist desweiteren wenigstens einen in der Steuerbohrung (57) unter wenigstens teilweiser Freigabe und/oder Absperrung der Kopplung mit den Anschlüssen führbaren Steuerkolben (49) auf;
6.7 ein Eingang der Druckwaage (10) für eine, den Funktionszustand des hydrodynamischen Bauelementes (2) wenigstens mittelbar charakterisierende Größe wird von einem hydraulischen Anschluß zur Bildung einer Druckkraft, die der den Grundfunktionszustand wenigstens mittelbar charaktersisierenden Größe wenigstens proportional ist, auf eine Kolbenfläche des Steuerkolbens (57) gebildet;
6.8 mit einem weiteren Eingang für eine Eingangsgröße in Form einer Gegenkraft, die **durch** den Druck im Ablauf (32) des hydrodynamischen Bauelementes (2) charakterisiert ist.

7. Steuervorrichtung nach Anspruch 6, **dadurch gekennzeichnet, daß** weitere Mittel zur Beeinflussung des Zulaufes aus einer Betriebsmittelquelle (6) und/oder der Realisierung eines Betriebsmittelumlaufes in einem geschlossenen Kreislauf aus dem hydrodynamischen Bauelement (2) vorgesehen sind.

8. Steuervorrichtung nach Anspruch 6 oder 7 **dadurch gekennzeichnet, daß** die Steuerbohrung (57) mit den folgenden Anschlüssen verbunden ist:
- Leitungen (18, 14) eines geschlossenen, dem Arbeitsraum des hydrodynamischen Bauelementes (2) zugeordneten hydrodynamischen Kreislaufes (33).

9. Steuervorrichtung nach einem der Ansprüche 6 bis 8, **dadurch gekennzeichnet, daß** die Mittel zur Beeinflussung des Zu- und/oder Ablaufes. (30, 32) des hydrodynamischen Bauelementes (2) und/oder der Leitungen (15) des Schmiermittelversorgungssystems (9) des Getriebeteiles und/oder des Zulaufes aus einer Betriebsmittelversorgungsquelle (6) von der Druckwaage (10) gebildet werden.

10. Steuervorrichtung nach Anspruch 6 bis 9, **dadurch gekennzeichnet, daß** Eingang der Druckwaage (10) mit einem Proportionalventil (70) als Einrichtung zur Vorgabe einer Sollgröße in einem Grundfunktionszustand gekoppelt ist.

11. Steuervorrichtung nach einem der Ansprüche 6 bis 10, **dadurch gekennzeichnet, daß** der Steuerkolben (49) wenigstens zwei Teilelemente (49.1, 49.2) umfaßt, welche miteinander fest verbindbar sind.

12. Steuervorrichtung nach einem der Ansprüche 8 bis 11, **dadurch gekennzeichnet, daß** Mittel zur Realisierung einer fortlaufenden Schmiermittelversorgung des Getriebeteiles (3) vorgesehen sind und die Ventileinrichtungen umfassen, welche in der Steuerbohrung (57) der Druckwaage (10) angeordnet sind.

13. Steuervorrichtung nach Anspruch 12, **dadurch gekennzeichnet, daß** die Mittel zur Realisierung einer fortlaufenden Schmiermittelversorgung wenigstens ein Mengenregelventil (VLB) zwischen den Anschlüsen der Schmiermittelversorgungsleitung (15) und dem Zulauf (30) zum hydrodynamischen Bauelement (2) in der Steuerbohrung (57) umfassen.

14. Steuervorrichtung nach Anspruch 12, **dadurch gekennzeichnet, daß** die Mittel zur Realisierung einer fortlaufenden Schmiermittelversorgung wenigstens zwei druckabhängig betätigbare Ventileinrichtungen (VLB1, VLB2) in der Steuerbohrung (57) umfassen, wobei über eine erste Ventileinrichtung (VLB1) die Koppelung zwischen Betriebsmittelversorgungsquelle (6) und Zulauf (30) des hydrodynamischen Bauelementes (2) und die zweite Ventileinrichtung (VLB2) die Koppelung zwischen Betriebsmittelversorgungsquelle (6) und Schmiermittelversorgungssystem (9) des Getriebeteiles (3) erfolgt.

15. Steuervorrichtung nach einem der Ansprüche 6 bis 14, für ein Antriebssystem mit einer Speichereinrichtung (27) **gekennzeichnet durch** die folgenden Merkmale:
15.1 die Druckwaage weist einen Anschluß (19) auf, welcher mit der Speichereinrichtung verbunden ist und **durch** Verschiebung des Steuerkolbens (57) mit dem Zulauf (30) des hydrodynamischen Bauelementes (2) koppelbar ist;
15.2 dem Anschluß (19) ist eine Ventileinrichtung (R2) zur Verhinderung des Betriebsmittelrücklaufes aus dem hydrodynamischen Bauelement zugeordnet.

16. Steuervorrichtung nach Anspruch 15, **gekennzeichnet durch** die folgenden Merkmale:
16.1 die Speichereinrichtung (27) ist mit der Schmiermittelversorgungsleitung (15) verbunden, wobei in der Verbindungsleitung Mittel zur Verhinderung des Ausschiebens der Speichermenge in die Schmiermittelversorgungsleitung (15) vorgesehen sind;
16.2 die Mittel umfassen zwei Rückschlagventileinrichtungen (R1, R5).

17. Steuervorrichtung nach Anspruch 16, **dadurch gekennzeichnet, daß** die Ventileinrichtung (R2) und die Rückschlagventileinrichtungen (R1, R5) in der Steuerbohrung (57) der Druckwaage (10) angeordnet sind.

18. Steuervorrichtung nach einem der Ansprüche 14 oder 17, **dadurch gekennzeichnet, daß** jeweils die zur Realisierung einer fortlaufenden Schmiermittelversorgung zwei druckabhängig betätigbaren Ventileinrichtungen (VLB1, VLB2) und/oder die in der Steuerbohrung (57) anordenbaren Rückschlagventileinrichtungen (R1, R5) und die Ventileinrichtung (R2) in einer Ventilbaueinheit zusammengefaßt sind.

## Claims

1. A method for controlling the filling of a hydrodynamic component (2) in a drive unit with at least one transmission part (3) and a lubricant or operating medium supply system (4) associated with the two jointly, comprising at least one operating medium source (6), a cooling device (11) and a storage device, with the hydrodynamic component (2) comprising at least two blade wheels which jointly form a toroidal working chamber, to which is associated at least one inlet line (30) and one discharge line (32);
**characterized by** the following steps:
1.1 a setpoint variable for a variable characterizing at least indirectly the basic functional state of the hydrodynamic component (2) can be predetermined as an input variable of a control device (8) associated with the jointly associated lubricant or operating medium supply system (4) for triggering an actuating device for influencing the supply of operating medium of the hydrodynamic component (2) in such a way that at least three basic functional states of the hydrodynamic component (2) can be set, with a supply of the lubricant system of the transmission part (3) being additionally adjustable in a setpoint functional state, and with the correcting variable for actuating the actuating device being generated from the setpoint variable of the variable characterizing at least indirectly the functional state of the hydrodynamic component depending on the pressure in the discharge line (32) or a variable characterizing at least indirectly the pressure in the discharge line (32) of the hydrodynamic component (2);
1.2 in a first basic functional state of the hydrodynamic component (2), operating medium is supplied from the operating medium source (6) via the cooling device (11) to the lubricant connection (15) of the transmission part (3);
1.3 in a second basic functional state of the hydrodynamic component (2), the working chamber of the hydrodynamic component (2) is supplied with operating medium from the reservoir (27) and the operating medium source (6), and in a closed circulation, operating medium is supplied via the cooling device (11) to the working chamber again;
1.4 in a third basic functional state, the pressure in the discharge line (32) from the working chamber is changeably adjustable and the working chamber of the hydrodynamic component (2) is supplied with operating medium from the reservoir (27) and the operating medium source (6), and in a closed circulation, operating medium is supplied via the cooling device (11) to the working chamber again;

2. A method according to claim 1, **characterized in that** in the third setpoint functional state two threshold states are differentiated, a first threshold state for high pressures and a second threshold state for low pressures.

3. A method according to claim 1 or 2, **characterized in that** the change of the pressure in the discharge line (32) to the working chamber is continuously adjustable at least in the third basic functional state.

4. A method according to one of the claims 1 to 3, **characterized in that** the transition between the individual functional states is continuously adjustable.

5. A method according to one of the claims 1 to 4, **characterized in that** the supply of the hydrodynamic component (2) with operating medium occurs prioritized before the supply of the transmission part (3) with lubricant.

6. A control apparatus for influencing the functional state of a hydrodynamic component (2) for performing a method according to one of the claims 1 to 5 in a drive unit (1) with at least one transmission part (3) and a lubricant or operating medium supply system (4) associated with the two jointly, comprising at least one operating medium source (6), a cooling device (11) and a storage device (27), with the hydrodynamic component (2) comprising at least two blade wheels which jointly form a toroidal working chamber, to which is associated at least one inlet line (30) and one discharge line (32);
**characterized by** the following features:
6.1 with a common control device (8) with at least one input for a variable characterizing at least indirectly the basic functional state and a plurality of outputs;
6.2 the outputs are coupled with means for influencing the inlet and/or discharge line (30, 32) of the hydrodynamic component and/or the lines (15) of the lubricant supply system (9) of the transmission part (3);
6.3 the control device (8) comprises a pressure balance (10);
6.4 the pressure balance (10) comprises at least one control bore (57);
6.5 the control bore (57) is connected at least indirectly with at least the following connections acting as output:
- inlet (30) of the hydrodynamic component (2);
- outlet (32) of the hydrodynamic component (2);
- lubricant supply line (15);
- operating medium supply source (6);
6.6 the pressure balance (10) further comprises at least one control piston (49) which can be guided in the control bore (57) under at least partial release and/or blockage of the coupling with the connection;
6.7 one input of the pressure balance (10) for a variable characterizing the functional state of the hydrodynamic component (2) at least indirectly is formed by a hydraulic connection for forming a pressure force on a piston surface of the control piston (57), which pressure force is at least proportional to the variable characterizing at least indirectly the basic functional state;
6.8 with a further input for an input variable in the form of a counter-force which is **characterized by** the pressure in the outlet (32) of the hydrodynamic component (2).

7. A control apparatus according to claim 6, **characterized in that** further means are provided for influencing the feeding from an operating medium source (6) and/or for realizing an operating medium circulation in a closed circulation from the hydrodynamic component (2).

8. A control apparatus according to claim 6 or 7, **characterized in that** the control bore (57) is connected with the following connections:
- lines (18, 14) of a closed hydrodynamic circulation (33) which is associated with the working chamber of the hydrodynamic component (2).

9. A control apparatus according to one of the claims 6 to 8, **characterized in that** the means for influencing the inlet and/or outlet (30, 32) of the hydrodynamic component (2) and/or the lines (15) of the lubricant supply system (9) of the transmission part and/or the feeding from an operating medium supply source (6) are formed by the pressure balance (10).

10. A control apparatus according to claim 6 to 9, **characterized in that** the input of the pressure balance (10) is coupled with a proportional valve (70) as a device for predetermining a setpoint value in a basic functional state.

11. A control apparatus according to one of the claims 6 to 10, **characterized in that** the control piston (49) comprises at least two partial elements (49.1, 49.2) which can be rigidly connected with one another.

12. A control apparatus according to one of the claims 8 to 11, **characterized in that** means are provided for realizing a continuous supply with lubricant of the transmission part (3) and comprise valve devices which are arranged in the control bore (57) of the pressure balance (10).

13. A control apparatus according to claim 12, **characterized in that** the means for realizing a continuous supply with lubricant comprise at least one volume controlling valve (VLB) between the connections of the lubricant supply line (15) and the inlet (30) to the hydrodynamic component (2) in the control bore (57).

14. A control apparatus according to claim 12, **characterized in that** the means for realizing a continuous lubricant supply comprise at least two valve devices (VLB1, VLB2) in the control bore which can be actuated dependent on the pressure, with the coupling between operating medium supply source (6) and the inlet (30) of the hydrodynamic component (2) occurring via a first valve device (VLB1) and the coupling between the operating medium supply source (6) and the lubricant supply system (9) of the transmission part (3) occurring via the second valve device (VLB2).

15. A control apparatus according to one of the claims 6 to 14, for a drive system with a storage device (27), **characterized by** the following features:
15.1 the pressure balance comprises a connection (19) which is connected with the storage device and can be coupled with the inlet (30) of the hydrodynamic component (2) by displacement of the control piston (57);
15.2 the connection (19) is associated with a valve device (R2) for preventing the return flow of the operating medium from the hydrodynamic component.

16. A control apparatus according to claim 15, **characterized by** the following features:
16.1 the storage device (27) is connected with the lubricant supply line (15), with means being provided in the connecting line for preventing the storage quantity from being pushed out into the lubricant supply line (15);
16.2 the means comprise two non-return valve devices (R1, R5).

17. A control apparatus according to claim 16, **characterized in that** the valve device (R2) and the non-return valve devices (R1, R5) are arranged in the control bore (57) of the pressure balance (10).

18. A control apparatus according to one of the claims 14 or 17, **characterized in that** the two valve devices (VLB1, VLB2) each which can be actuated in a pressure-dependent way and are provided for realizing a continuous supply with lubricant and/or the non-return valve devices (R1, R5) which can be arranged in the control bore (57) and the valve device (R2) are combined in a valve module.

## Revendications

1. Procédé pour commander le remplissage d'un composant hydrodynamique (2) dans une unité d'entraînement avec au moins une partie engrenage (3) et avec un système d'alimentation en lubrifiant ou en fluide de travail (4) commun aux deux, comprenant au moins une source de fluide de travail (6), un dispositif de refroidissement (11) et un dispositif de stockage, le composant hydrodynamique (2) comprenant au moins deux roues à palettes qui forment à elles deux un espace de travail en forme de tore auquel sont associées au moins une conduite d'arrivée (30) et une conduite d'évacuation (32) ;
**caractérisé par** les étapes suivantes :
1.1 on dicte à un dispositif de commande (8) associé au système d'alimentation en lubrifiant ou en fluide de travail (4) commun et destiné à activer un dispositif de réglage destiné à influencer l'alimentation en fluide de travail du composant hydrodynamique (2) une grandeur de consigne pour une grandeur tenant lieu de grandeur d'entrée et caractérisant du moins indirectement l'état de fonctionnement de base du composant hydrodynamique (2) de telle sorte qu'au moins trois états de fonctionnement de base du composant hydrodynamique (2) puissent être réglés, une alimentation du système de lubrifiant de la partie engrenage (3) étant de plus réglable dans un état de fonctionnement théorique et la grandeur réglante pour actionner le dispositif de réglage étant générée à partir de la grandeur de consigne de la grandeur caractérisant du moins indirectement l'état de fonctionnement du composant hydrodynamique en fonction de la pression dans la conduite d'évacuation (32) ou à partir d'une grandeur caractérisant du moins indirectement la pression dans la conduite d'évacuation (32) du composant hydrodynamique (2) ;
1.2 on achemine, dans un premier état de fonctionnement de base du composant hydrodynamique (2), du fluide de travail depuis la source de fluide de travail (6) jusqu'au raccord pour le lubrifiant (15) dans la partie engrenage (3) en le faisant passer par le dispositif de refroidissement (11);
1.3 on achemine, dans un deuxième état de fonctionnement de base du composant hydrodynamique (2), du fluide de travail provenant du réservoir (27) et de la source de fluide de travail (6) vers l'espace de travail du composant hydrodynamique (2) et on fait retourner dans l'espace de travail, dans un circuit fermé, du fluide de travail provenant de l'espace de travail que l'on a fait passer à travers le dispositif de refroidissement (11) ;
1.4 on peut, dans un troisième état de fonctionnement de base, faire varier la pression dans la conduite d'évacuation (32) de l'espace de travail et on achemine vers l'espace de travail du composant hydrodynamique (2) du fluide de travail provenant du réservoir (27) et de la source de fluide de travail (6) et on fait retourner dans l'espace de travail, dans un circuit fermé, du fluide de travail provenant de l'espace de travail que l'on a fait passer à travers le dispositif de refroidissement (11).

2. Procédé selon la revendication 1, **caractérisé en ce que**, dans le troisième état de fonctionnement théorique, on distingue deux états limite, un premier état limite pour des pressions élevées et un deuxième état limite pour des pressions basses.

3. Procédé selon la revendication 1 ou 2, **caractérisé en ce que** la variation de la pression dans la conduite d'évacuation (32) menant à l'espace de travail est réglable de façon continue, du moins dans le troisième état de fonctionnement de base.

4. Procédé selon l'une quelconque des revendications 1 à 3, **caractérisé en ce que** la transition entre les différents états de fonctionnement est réglable de façon continue.

5. Procédé selon l'une quelconque des revendications 1 à 4, **caractérisé en ce que** l'alimentation en fluide de travail du composant hydrodynamique (2) est prioritaire sur l'alimentation en lubrifiant de la partie engrenage (3).

6. Dispositif de commande permettant d'influencer l'état de fonctionnement d'un composant hydrodynamique (2) et destiné à mettre en oeuvre un procédé selon l'une quelconque des revendications 1 à 5 dans une unité d'entraînement (1) avec au moins une partie engrenage (3) et un système d'alimentation en lubrifiant ou en fluide de travail (4) commun aux deux, comprenant au moins une source de fluide de travail (6), un dispositif de refroidissement (11) et un dispositif de stockage (27), le composant hydrodynamique (2) comprenant au moins deux roues à palettes qui forment à elles deux un espace de travail en forme de tore auquel sont associées au moins une conduite d'admission (30) et une conduite d'évacuation (32) ;
**caractérisé par** les particularités suivantes :
6.1 avec un dispositif de commande (8) commun avec au moins une entrée pour une grandeur caractérisant du moins indirectement l'état de fonctionnement de base et avec une pluralité de sorties ;
6.2 les sorties sont couplées à des moyens destinés à influencer la conduite d'arrivée et/ou la conduite d'évacuation (30, 32) du composant hydrodynamique et/ou aux conduites (15) du système d'alimentation en lubrifiant (9) de la partie engrenage (3) ;
6.3 le dispositif de commande (8) comprend une balance manométrique (10) ;
6.4 la balance manométrique (10) comporte au moins un trou de commande (57) ;
6.5 le trou de commande (57) est relié du moins indirectement aux raccords suivants au moins faisant office de sortie :
- arrivée (30) du composant hydrodynamique (2)
- évacuation (32) du composant hydrodynamique (2)
- conduite d'alimentation en lubrifiant (15)
- source d'alimentation en fluide de travail (6)
6.6 la balance manométrique (10) comporte par ailleurs au moins un piston de commande (49) apte à être guidé dans le trou de commande (57) pour autoriser et/ou interdire du moins partiellement le couplage avec les raccords ;
6.7 une entrée de la balance manométrique (10) pour une grandeur caractérisant du moins indirectement l'état de fonctionnement du composant hydrodynamique (2) est formée par un raccord hydraulique destiné à former une force de pression du moins proportionnelle à la grandeur caractérisant du moins indirectement l'état de fonctionnement de base, cette force de pression étant appliquée sur une surface du piston de commande (57) ;
6.8 avec encore une entrée pour une grandeur d'entrée sous forme de force antagoniste **caractérisée par** la pression dans l'évacuation (32) du composant hydrodynamique (2).

7. Dispositif de commande selon la revendication 6, **caractérisé en ce que** sont prévus encore d'autres moyens destinés à influencer l'arrivée du fluide provenant d'une source de fluide de travail (6) et/ou à réaliser une circulation du fluide de travail en circuit fermé du composant hydrodynamique (2).

8. Dispositif de commande selon la revendication 6 ou 7, **caractérisé en ce que** le trou de commande (57) est relié aux raccords suivants :
- aux conduites (18, 14) d'un circuit hydrodynamique (33) fermé associé à l'espace de travail du composant hydrodynamique (2).

9. Dispositif de commande selon l'une quelconque des revendications 6 à 8, **caractérisé en ce que** les moyens pour influencer l'arrivée et/ou l'évacuation (30, 32) du composant hydrodynamique (2) et/ou les conduites (15) du système d'alimentation en lubrifiant (9) de la partie engrenage et/ou l'arrivée de fluide provenant d'une source d'alimentation en fluide de travail (6) sont formés par la balance manométrique (10).

10. Dispositif de commande selon les revendications 6 à 9, **caractérisé en ce que** l'entrée de la balance manométrique (10) est couplée à une valve proportionnelle (70) faisant office de dispositif destiné à dicter une grandeur de consigne dans un état de fonctionnement de base.

11. Dispositif de commande selon l'une quelconque des revendications 6 à 10, **caractérisé en ce que** le piston de commande (49) comprend au moins deux parties d'élément (49.1, 49.2) qui sont aptes à être réunies de façon fixe.

12. Dispositif de commande selon l'une quelconque des revendications 8 à 11, **caractérisé en ce que** sont prévus des moyens permettant de réaliser une alimentation continue en lubrifiant de la partie engrenage (3) et comprenant les systèmes de valves qui sont disposés dans le trou de commande (57) de la balance manométrique (10).

13. Dispositif de commande selon la revendication 12, **caractérisé en ce que** les moyens permettant de réaliser une alimentation continue en lubrifiant comprennent au moins un régulateur de débit (VLB) prévu dans le trou de commande (57) entre les raccords de la conduite d'alimentation en lubrifiant (15) et l'arrivée (30) dans le composant hydrodynamique (2).

14. Dispositif de commande selon la revendication 12, **caractérisé en ce que** les moyens permettant de réaliser une alimentation continue en lubrifiant comprennent au moins deux systèmes de valves (VLB1, VLB2) actionnables en fonction de la pression et prévus dans le trou de commande (57), le couplage entre la source d'alimentation en fluide de travail (6) et l'arrivée (30) du composant hydrodynamique (2) étant réalisé par un premier système de valves (VLB1) et le couplage entre la source d'alimentation en fluide de travail (6) et le système d'alimentation en lubrifiant (9) de la partie engrenage (3), par le deuxième système de valves (VLB2).

15. Dispositif de commande selon l'une quelconque des revendications 6 à 14, pour un système d'entraînement avec un dispositif de stockage (27) **caractérisé par** les particularités suivantes :
15.1 la balance manométrique comporte un raccord (19) qui est relié au dispositif de stockage et qui est couplable à l'arrivée (30) du composant hydrodynamique (2) par déplacement du piston de commande (57) ;
15.2 un système de valves (R2) destiné à empêcher le retour de fluide de travail du composant hydrodynamique est associé au raccord (19).

16. Dispositif de commande selon la revendication 15, **caractérisé par** les particularités suivantes :
16.1 le dispositif de stockage (27) est relié à la conduite d'alimentation en lubrifiant (15), des moyens destinés à empêcher le fluide stocké d'être refoulé dans la conduite d'alimentation en lubrifiant (15) étant prévus dans la conduite de liaison ;
16.2 les moyens comprennent deux systèmes de valves antiretour (R1, R5).

17. Dispositif de commande selon la revendication 16, **caractérisé en ce que** le système de valves (R2) et les systèmes de valve antiretour (R1, R5) sont disposés dans le trou de commande (57) de la balance manométrique (10).

18. Dispositif de commande selon l'une quelconque des revendications 14 ou 17, **caractérisé en ce que** les deux systèmes de valves (VLB1, VLB2) actionnables en fonction de la pression et destinés à réaliser une alimentation continue en lubrifiant et/ou les systèmes de valves antiretour (R1, R5) et le système de valves (R2) aptes à être disposés dans le trou de commande (57) sont regroupés dans un bloc de valves.
